# EUROPEAN PATENT APPLICATION

(11) **EP 4 486 038 A1**
(43) Date of publication of application: **01.01.2025**
(21) Application number: 23777968.1
(22) Date of filing: 22.03.2023
(51) Int. Cl.: H04W 72/12

(54) **COMMUNICATION METHOD AND APPARATUS**

(30) Priority: 29.03.2022 CN 202210319026; 31.03.2022 CN 202210335839
(71) Applicant: Huawei Technologies Co., Ltd., Shenzhen, Guangdong 518129 (CN)
(72) Inventor: HUANG, Zhenglei, Shenzhen, Guangdong 518129 (CN); PAN, Qi, Shenzhen, Guangdong 518129 (CN); NI, Hui, Shenzhen, Guangdong 518129 (CN)
(74) Representative: Pfenning, Meinig & Partner mbB
(86) International application number: PCT/CN2023/083188
(87) International publication number: WO 2023/185598

(57) **Abstract**

This application relates to the communication field, and provides a communication method and apparatus, to reduce data processing complexity, ensure both data processing efficiency and a data processing delay, and may be used in a communication system. The method includes: A policy control network element obtains a first transmission delay, and determines, based on the first transmission delay, delay budget information for transmitting service data. The policy control network element sends the delay budget information to a session management network element, to implement air interface resource scheduling. The delay budget information indicates an uplink transmission delay budget and/or a downlink transmission delay budget.

## Description

This application claims priority to Chinese Patent Application No. 202210319026.7, filed with the China National Intellectual Property Administration on March 29, 2022 and entitled "COMMUNICATION METHOD AND APPARATUS", which is incorporated herein by reference in its entirety.

This application claims priority to Chinese Patent Application No. 202210335839.5, filed with the China National Intellectual Property Administration on March 31, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In an interactive multimedia service, a terminal collects user-related data, and sends the user-related data to an application server for processing, to obtain processed data from the application server. For example, in virtual reality (virtual reality, VR), the terminal collects action information of a user, for example, information about a head action, a hand action, a squatting action, a stand-up action, or the like, and sends the information to the application server by using a communication network. The application server renders an image based on the action information of the user, and sends a rendered image to the terminal by using the communication network, to provide the rendered image for the user to watch. In this process, a delay between collecting the user-related data by the terminal and obtaining the processed data by the terminal is large, affecting user experience.

For this problem, in a current solution, an air interface delay may be determined based on time and an end-to-end delay. Specifically, the data sent by the terminal carries uplink sending time. In a delivery process of the data processed by an application processor, a downlink delay budget is determined based on the uplink sending time, and an air interface resource of a radio access network element is adjusted based on the downlink delay budget. However, in the foregoing solution, the radio access network element needs to adjust a data processing policy for each downlink data packet, for example, scheduling the air interface resource. Consequently, a data processing process is complex and inefficient.

### SUMMARY

Embodiments of this application provide a communication method and apparatus, to reduce complexity of a data processing process. In this way, both data processing efficiency and a data processing delay are ensured.

To achieve the foregoing objective, the following technical solutions are used in this application.

According to a first aspect, a communication method is provided. The communication method includes: An application server determines a first transmission delay, where the first transmission delay is used to represent a round-trip transmission latency requirement of service data in a network. The application server sends the first transmission delay to a policy control network element, where the first transmission delay is used by the policy control network element to determine, based on the first transmission delay, delay budget information for transmitting the service data, and the delay budget information indicates an uplink transmission delay budget and/or a downlink transmission delay budget.

Based on the communication method provided in the first aspect, the policy control network element determines the delay budget information based on the first transmission delay, and sends the delay budget information to a radio access network element by using a session management network element. The radio access network element may schedule an air interface resource based on the uplink transmission delay budget and/or the downlink transmission delay budget in the delay budget information. For example, the air interface resource may be adjusted when the air interface resource cannot support the current delay budget information, so that scheduling that is of the air interface resource and that is for each data packet can be avoided. In this way, a frequency of adjusting the air interface resource is reduced, data processing complexity is reduced, and both a service delay requirement and data processing efficiency are ensured.

In a possible design solution, the method provided in the first aspect may further include: The application server obtains a second transmission delay, where the second transmission delay is a round-trip transmission latency currently supported by the network. The application server adjusts an application server processing delay based on the second transmission delay. The application server updates the first transmission delay based on one or more of a service end-to-end delay, a terminal processing delay, and the application server processing delay. The application server sends an updated first transmission delay to the policy control network element. In this way, the application server may correspondingly adjust the application server processing delay based on a change of a network transmission delay, to enable the application server processing delay to match the round-trip transmission latency supported by the network, and enable a network round-trip transmission latency of the service data to meet a service end-to-end delay requirement.

Optionally, that the application server obtains a second transmission delay may include: The application server receives the second transmission delay from the policy control network element, to reduce overheads of the application server and improve running efficiency. The second transmission delay is determined based on network transmission delay information. Alternatively, the application server receives network transmission delay information from the policy control network element, and determines the second transmission delay based on the network transmission delay information, to reduce overheads of the policy control network element and improve running efficiency.

In a possible design solution, before that the application server sends the first transmission delay to a policy control network element, the communication method provided in the first aspect may further include: The application server determines that the first transmission delay is greater than or equal to a transmission delay threshold. In this way, the application server may send the first transmission delay to the policy control network element when the round-trip transmission latency requirement of the network is greater than or equal to the transmission delay threshold. In this way, a quantity of times that the policy control network element determines the delay budget information can be reduced, and the frequency of adjusting the air interface resource of the radio access network element can be further reduced, so that data processing efficiency is improved.

According to a second aspect, a communication method is provided. The communication method includes: A policy control network element obtains a first transmission delay, where the first transmission delay is used to represent a round-trip transmission latency requirement of service data in a network. The policy control network element determines, based on the first transmission delay, delay budget information for transmitting the service data. The delay budget information indicates an uplink transmission delay budget and/or a downlink transmission delay budget. The policy control network element sends the delay budget information to a session management network element.

Based on the communication method provided in the second aspect, the policy control network element determines the delay budget information based on the first transmission delay, and sends the delay budget information to the session management network element. For example, the policy control network element may send the delay budget information to a radio access network element by using the session management network element, to update delay budget information of the radio access network element.

In a possible design solution, that the policy control network element determines, based on the first transmission delay, delay budget information for transmitting the service data includes: The policy control network element sends the first transmission delay to a network data analytics network element. The policy control network element receives the delay budget information from the network data analytics network element, to reduce overheads of the policy control network element and improve running efficiency. The delay budget information is determined based on the first transmission delay.

In a possible design solution, that the policy control network element determines, based on the first transmission delay, delay budget information for transmitting the service data may include: The policy control network element obtains network transmission delay information, where the network transmission delay information indicates an uplink transmission delay supported by the network and/or a downlink transmission delay supported by the network. The policy control network element determines, based on the first transmission delay and the network transmission delay information, the delay budget information for transmitting the service data. In this way, the policy control network element determines the delay budget information based on the first transmission delay and the network transmission delay information, so that dependence on another network element other than the policy control network element can be reduced and adaptability can be improved.

In a possible design solution, the method provided in the second aspect may further include: The policy control network element obtains the network transmission delay information, where the network transmission delay information indicates the uplink transmission delay supported by the network and/or the downlink transmission delay supported by the network. The policy control network element determines, based on the network transmission delay information, that the network cannot support the first transmission delay. The policy control network element determines a second transmission delay based on the network transmission delay information, where the second transmission delay is a round-trip transmission latency currently supported by the network. The policy control network element sends the second transmission delay to an application server, where the second transmission delay may be used to update the first transmission delay. In this way, overheads of the application server can be reduced and running efficiency can be improved. The policy control network element receives an updated first transmission delay from the application server, where the updated first transmission delay is determined based on the second transmission delay. In this way, when determining that the network cannot support the first transmission delay, the policy control network element may provide the second transmission delay to the application server, and the application server updates the first transmission delay. For example, the application server may adjust an application server processing delay based on the second transmission delay, and then update the first transmission delay based on an adjusted application server processing delay, to better ensure a service delay requirement.

In a possible design solution, the method provided in the second aspect may further include: The policy control network element obtains the network transmission delay information, where the network transmission delay information indicates the uplink transmission delay supported by the network and/or the downlink transmission delay supported by the network. The policy control network element determines, based on the network transmission delay information, that the network cannot support the first transmission delay. The policy control network element sends the network transmission delay information to an application server, where the network transmission delay information is used to determine a second transmission delay, and the second transmission delay is a round-trip transmission latency currently supported by the network. The policy control network element receives an updated first transmission delay from the application server, where the updated first transmission delay is determined based on the second transmission delay. In this way, when determining that the network cannot support the first transmission delay, the policy control network element may provide the network transmission delay information to the application server, and the application server updates the first transmission delay. For example, the application server may adjust an application server processing delay based on the second transmission delay determined based on the network transmission delay information, and then update the first transmission delay based on an adjusted application server processing delay, to better ensure a service delay requirement.

In a possible design solution, that the policy control network element determines, based on the first transmission delay, delay budget information for transmitting the service data may include: The policy control network element determines, according to the first transmission delay and a delay allocation policy, the delay budget information for transmitting the service data. In this way, a process of determining the delay budget information can be simplified, so that overheads of the policy control network element can be reduced and running efficiency can be improved. The delay allocation policy indicates an association relationship between the uplink transmission delay budget and the downlink transmission delay budget.

In addition, for other technical effects of the communication method according to the second aspect, refer to the technical effects of the communication method according to the first aspect. Details are not described herein again.

According to a third aspect, a communication method is provided. The communication method includes: A session management network element sends a delay reporting policy to a radio access network element and/or a user plane function network element. The delay reporting policy indicates a sending rule of network transmission delay information, and the network transmission delay information indicates an uplink transmission delay supported by a network and/or a downlink transmission delay supported by the network. The session management network element receives the network transmission delay information. The session management network element sends the network transmission delay information to a policy control network element, where the network transmission delay information is used by the policy control network element to determine delay budget information for transmitting service data.

Based on the communication method provided in the third aspect, the session management network element sends the delay reporting policy to the radio access network element and/or the user plane function network element, so that the radio access network element and/or the session management network element report/reports the network transmission delay information according to the delay reporting policy. In this way, a frequency of sending the network transmission delay information is reduced, a frequency of determining the delay budget information by the policy control network element is reduced, data processing complexity is reduced, and data processing efficiency is improved.

In a possible design solution, the delay reporting policy may include one or more of the following: a reporting periodicity, a reporting delay threshold, or a reported event, to reduce the frequency of sending the network transmission delay information, reduce the data processing complexity, and improve the data processing efficiency.

In addition, for other technical effects of the communication method according to the third aspect, refer to the technical effects of the communication method according to the first aspect or the second aspect. Details are not described herein again.

According to a fourth aspect, a communication method is provided. The communication method includes: A radio access network element receives a delay reporting policy from a session management network element. The delay reporting policy indicates a sending rule of network transmission delay information, and the network transmission delay information indicates an uplink transmission delay supported by a network and/or a downlink transmission delay supported by the network. The radio access network element sends the network transmission delay information according to the delay reporting policy.

Based on the communication method provided in the fourth aspect, the radio access network element may send the network transmission delay information according to the sending rule in the delay reporting policy. In this way, a frequency of sending the network transmission delay information can be reduced, to reduce a frequency of updating a first transmission delay, so that data processing complexity can be reduced and data processing efficiency is improved.

In a possible design solution, the delay reporting policy may include one or more of the following: a reporting periodicity, a reporting delay threshold, or a reported event.

Optionally, when the delay reporting policy includes the reporting periodicity, that the radio access network element sends the network transmission delay information according to the delay reporting policy may include: The radio access network element sends the network transmission delay information based on the reporting periodicity. In this way, the frequency of sending the network transmission delay information can be reduced, to reduce the frequency of updating the first transmission delay, so that the data processing complexity is reduced and the data processing efficiency is improved.

Optionally, when the delay reporting policy includes the reporting delay threshold, that the radio access network element sends the network transmission delay information according to the delay reporting policy may include: The radio access network element sends the network transmission delay information in a case in which the network transmission delay information is greater than or equal to the reporting delay threshold. In this way, the frequency of sending the network transmission delay information can be reduced, to reduce the frequency of updating the first transmission delay, so that the data processing complexity is reduced and the data processing efficiency is improved.

Optionally, when the delay reporting policy includes the reported event, that the radio access network element sends the network transmission delay information according to the delay reporting policy may include: The radio access network element sends the network transmission delay information when the reported event is that the radio access network element cannot support received delay budget information. In this way, the frequency of sending the network transmission delay information can be reduced, to reduce the frequency of updating the first transmission delay, so that the data processing complexity is reduced and the data processing efficiency is improved.

In a possible design solution, the method provided in the fourth aspect may further include: The radio access network element receives the delay budget information for transmitting service data. The delay budget information indicates an uplink transmission delay budget and/or a downlink transmission delay budget. The radio access network element determines, based on the delay budget information, an air interface resource used to transmit the service data. Alternatively, the radio access network element adjusts, based on the delay budget information, an air interface resource used to transmit the service data. In this way, the air interface resource can match the delay budget information, so that a network transmission delay can meet a service end-to-end delay requirement.

In addition, for other technical effects of the communication method according to the fourth aspect, refer to the technical effects of the communication method according to the first aspect to the third aspect. Details are not described herein again.

According to a fifth aspect, a communication apparatus is provided. The communication apparatus includes modules configured to perform the method according to the first aspect, such as a processing module and a transceiver module.

The processing module is configured to determine a first transmission delay, where the first transmission delay is used to represent a round-trip transmission latency requirement of service data in a network. The transceiver module is configured to send the first transmission delay to a policy control network element, where the first transmission delay is used by the policy control network element to determine, based on the first transmission delay, delay budget information for transmitting the service data, and the delay budget information indicates an uplink transmission delay budget and/or a downlink transmission delay budget.

In a possible design solution, the processing module is further configured to obtain a second transmission delay, adjust an application server processing delay based on the second transmission delay, and update the first transmission delay based on one or more of a service end-to-end delay, a terminal processing delay, and the application server processing delay. The second transmission delay is a round-trip transmission latency currently supported by the network. The transceiver module is further configured to send an updated first transmission delay to the policy control network element.

Optionally, the processing module is specifically configured to receive, by using the transceiver module, the second transmission delay from the policy control network element, where the second transmission delay is determined based on the network transmission delay information. Alternatively, the processing module is specifically configured to receive, by using the transceiver module, network transmission delay information from the policy control network element, and determine the second transmission delay based on the network transmission delay information.

In a possible design solution, before the transceiver module sends the first transmission delay to the policy control network element, the processing module determines that the first transmission delay is greater than or equal to a first delay threshold.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus is enabled to perform the communication method according to the first aspect.

It should be noted that the communication apparatus according to the fifth aspect may be a network device, such as an application server, may be a chip (system) or another part or component that may be disposed in the network device, or may be an apparatus including the network device. This is not limited in this application.

In addition, for technical effects of the communication apparatus according to the fifth aspect, refer to the technical effects of the communication method according to the first aspect. Details are not described herein again.

According to a sixth aspect, a communication apparatus is provided. The communication apparatus includes modules configured to perform the method according to the second aspect, such as a processing module and a transceiver module.

The processing module is configured to: obtain a first transmission delay, where the first transmission delay is used to represent a round-trip transmission latency requirement of service data in a network; and determine, based on the first transmission delay, delay budget information for transmitting the service data. The delay budget information indicates an uplink transmission delay budget and/or a downlink transmission delay budget. The transceiver module is configured to send the delay budget information to a session management network element.

In a possible design solution, the processing module is specifically configured to send, by using the transceiver module, the first transmission delay to a network data analytics network element, and receive the delay budget information from the network data analytics network element, where the delay budget information is determined based on the first transmission delay.

In a possible design solution, the processing module is specifically configured to: obtain network transmission delay information, where the network transmission delay information indicates an uplink transmission delay supported by the network and/or a downlink transmission delay supported by the network; and determine, based on the current first transmission delay and the network transmission delay information, the delay budget information for transmitting the service data.

In a possible design solution, the processing module is further configured to: obtain the network transmission delay information, where the network transmission delay information indicates the uplink transmission delay supported by the network and/or the downlink transmission delay supported by the network; and when determining, based on the network transmission delay information, that the network cannot support the first transmission delay, determine a second transmission delay based on the network transmission delay information, where the second transmission delay is a round-trip transmission latency currently supported by the network. The transceiver module is further configured to send the second transmission delay to an application server, and receive an updated first transmission delay from the application server. The updated first transmission delay is determined based on the second transmission delay.

In a possible design solution, the processing module is further configured to: obtain the network transmission delay information, where the network transmission delay information indicates the uplink transmission delay supported by the network and/or the downlink transmission delay supported by the network; and when determining, based on the network transmission delay information, that the network cannot support the first transmission delay, send the network transmission delay information to an application server, where the network transmission delay information is used to determine a second transmission delay, and the second transmission delay is a round-trip transmission latency currently supported by the network. The transceiver module is further configured to receive an updated first transmission delay from the application server. The updated first transmission delay is determined based on the second transmission delay.

In a possible design solution, the processing module is specifically configured for a policy control network element to determine, according to the first transmission delay and a delay allocation policy, the delay budget information for transmitting the service data. The delay allocation policy indicates an association relationship between the uplink transmission delay budget and the downlink transmission delay budget.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or the instructions, the communication apparatus is enabled to perform the communication method according to the second aspect.

It should be noted that the communication apparatus according to the sixth aspect may be a network device, such as an application server, may be a chip (system) or another part or component that may be disposed in the network device, or may be an apparatus including the network device. This is not limited in this application.

In addition, for technical effects of the communication apparatus according to the sixth aspect, refer to the technical effects of the communication method according to the second aspect. Details are not described herein again.

According to a seventh aspect, a communication apparatus is provided. The communication apparatus includes modules configured to perform the method according to the third aspect, such as a receiving module and a sending module.

The sending module is configured to send a delay reporting policy to a radio access network element and/or a user plane function network element. The delay reporting policy indicates a sending rule of network transmission delay information, and the network transmission delay information indicates an uplink transmission delay supported by a network and/or a downlink transmission delay supported by the network. The receiving module is configured to receive the network transmission delay information. The sending module is further configured to send the network transmission delay information to a policy control network element. The network transmission delay information is used by the policy control network element to determine delay budget information for transmitting service data.

In a possible design solution, the delay reporting policy includes one or more of the following: a reporting periodicity, a reporting delay threshold, or a reported event.

Optionally, the sending module and the receiving module may be integrated into one module, for example, a transceiver module. The transceiver module is configured to implement a sending function and a receiving function of the communication apparatus.

Optionally, the communication apparatus according to the seventh aspect may further include a processing module. The processing module is configured to implement a processing function of the communication apparatus.

Optionally, the communication apparatus according to the seventh aspect may further include a storage module, and the storage module stores a program or instructions. When the processing module executes the program or the instructions, the communication apparatus is enabled to perform the communication method according to the third aspect.

It should be noted that the communication apparatus according to the seventh aspect may be a network device, such as an application server, may be a chip (system) or another part or component that may be disposed in the network device, or may be an apparatus including the network device. This is not limited in this application.

In addition, for technical effects of the communication apparatus according to the seventh aspect, refer to the technical effects of the communication method according to the third aspect. Details are not described herein again.

According to an eighth aspect, a communication apparatus is provided. The communication apparatus includes modules configured to perform the method according to the fourth aspect, such as a processing module and a transceiver module.

The transceiver module is configured to receive a delay reporting policy from a session management network element. The delay reporting policy indicates a sending rule of network transmission delay information, and the network transmission delay information indicates an uplink transmission delay supported by a network and/or a downlink transmission delay supported by the network. The processing module is configured to send the network transmission delay information according to the delay reporting policy.

In a possible design solution, the delay reporting policy includes one or more of the following: a reporting periodicity, a reporting delay threshold, or a reported event.

Optionally, when the delay reporting policy includes the reporting periodicity, the transceiver module is specifically configured for a radio access network element to send the network transmission delay information based on the reporting periodicity.

Optionally, when the delay reporting policy includes the reporting delay threshold, the transceiver module is specifically configured for the radio access network element to send the network transmission delay information in a case in which the network transmission delay information is greater than or equal to the reporting delay threshold.

Optionally, when the delay reporting policy includes the reported event, the transceiver module is specifically configured for the radio access network element to send the network transmission delay information in a case in which the reported event is that the radio access network element cannot support a current first transmission delay.

In a possible design solution, the transceiver module is further configured to receive delay budget information for transmitting service data. The delay budget information indicates an uplink transmission delay budget and/or a downlink transmission delay budget. The processing module is further configured to determine, based on the delay budget information, an air interface resource used to transmit the service data. Alternatively, the processing module is further configured to adjust, based on the delay budget information, an air interface resource used to transmit the service data.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or the instructions, the communication apparatus is enabled to perform the communication method according to the fourth aspect.

It should be noted that the communication apparatus according to the eighth aspect may be a network device, such as an application server, may be a chip (system) or another part or component that may be disposed in the network device, or may be an apparatus including the network device. This is not limited in this application.

In addition, for technical effects of the communication apparatus according to the eighth aspect, refer to the technical effects of the communication method according to the fourth aspect. Details are not described herein again.

According to a ninth aspect, a communication apparatus is provided. The communication apparatus is configured to perform the communication method according to any one of the implementations of the first aspect to the fourth aspect.

In this application, the communication apparatus according to the ninth aspect may be a network device, a chip (system) or another part or component that may be disposed in the network device, or an apparatus that includes the network device.

It should be understood that the communication apparatus according to the ninth aspect includes a corresponding module, unit, or means (means) for implementing the communication method according to any one of the first aspect to the fourth aspect. The module, unit, or means may be implemented by hardware, may be implemented by software, or may be implemented by hardware executing corresponding software. The hardware or software includes one or more modules or units configured to perform functions related to the foregoing communication method.

In addition, for technical effects of the communication apparatus according to the ninth aspect, refer to the technical effects of the communication method according to any one of the first aspect to the fourth aspect. Details are not described herein again.

According to a tenth aspect, a communication apparatus is provided. The communication apparatus includes a processor, and the processor is configured to perform the communication method according to any one of the possible implementations of the first aspect to the fourth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In a possible design solution, the communication apparatus according to the tenth aspect may further include a memory. The memory and the processor may be integrated together, or may be disposed separately. The memory may be configured to store a computer program and/or data related to the communication method according to any one of the first aspect to the fourth aspect.

In this application, the communication apparatus according to the tenth aspect may be a network device, a chip (system) or another part or component that may be disposed in the network device, or an apparatus that includes the network device.

In addition, for technical effects of the communication apparatus according to the tenth aspect, refer to the technical effects of the communication method according to any one of the implementations of the first aspect to the fourth aspect. Details are not described herein again.

According to an eleventh aspect, a communication apparatus is provided. The communication apparatus includes a processor. The processor is coupled to a memory, and is configured to execute a computer program stored in the memory, to enable the communication apparatus to perform the communication method according to any one of the possible implementations of the first aspect to the fourth aspect.

In a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

In this application, the communication apparatus according to the eleventh aspect may be a network device, a chip (system) or another part or component that may be disposed in the network device, or an apparatus that includes the network device.

In addition, for technical effects of the communication apparatus according to the eleventh aspect, refer to the technical effects of the communication method according to any one of the implementations of the first aspect to the fourth aspect. Details are not described herein again.

According to a twelfth aspect, a communication apparatus is provided, including a processor and a memory. The memory is configured to store a computer program, and when the processor executes the computer program, the communication apparatus is enabled to perform the communication method according to any one of the implementations of the first aspect to the fourth aspect.

In a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In this application, the communication apparatus according to the twelfth aspect may be a network device, a chip (system) or another part or component that may be disposed in the network device, or an apparatus that includes the network device.

In addition, for technical effects of the communication apparatus according to the twelfth aspect, refer to the technical effects of the communication method according to any one of the implementations of the first aspect to the fourth aspect. Details are not described herein again.

According to a thirteenth aspect, a communication apparatus is provided, including a processor. The processor is coupled to a memory. After reading a computer program in the memory, the processor is configured to perform, based on the computer program, the communication method according to any one of the implementations of the first aspect to the fourth aspect.

In a possible design solution, the communication apparatus according to the thirteenth aspect may further include a transceiver. The transceiver may be a transceiver circuit or an interface circuit. The transceiver may be used by the communication apparatus according to the thirteenth aspect to communicate with another communication apparatus.

In this application, the communication apparatus according to the thirteenth aspect may be a network device, a chip (system) or another part or component that may be disposed in the network device, or an apparatus that includes the network device.

In addition, for technical effects of the communication apparatus according to the thirteenth aspect, refer to the technical effects of the communication method according to any one of the implementations of the first aspect to the fourth aspect. Details are not described herein again.

According to a fourteenth aspect, a processor is provided. The processor is configured to perform the communication method according to any one of the possible implementations of the first aspect to the fourth aspect.

According to a fifteenth aspect, a communication system is provided. The communication system includes one or more terminal devices and one or more network devices such as an application server, a policy control network element, a session management network element, and a radio access network element.

According to a sixteenth aspect, a computer-readable storage medium is provided, including a computer program or instructions. When the computer program or the instructions are run on a computer, the computer is enabled to perform the communication method according to any one of the possible implementations of the first aspect to the fourth aspect.

According to a seventeenth aspect, a computer program product is provided, including a computer program or instructions. When the computer program or the instructions are run on a computer, the computer is enabled to perform the communication method according to any one of the possible implementations of the first aspect to the fourth aspect.

### BRIEF DESCRIPTION OF DRAWINGS

FIG. 1 is a schematic diagram of a 5GS architecture according to an embodiment of this application;
FIG. 2 is a schematic diagram of a service data flow direction according to an embodiment of this application;
FIG. 3 is a schematic flowchart 1 of data processing according to an embodiment of this application;
FIG. 4 is a schematic flowchart 2 of data processing according to an embodiment of this application;
FIG. 5 is a schematic diagram of a structure of a communication system to which a communication method according to an embodiment of this application is applicable;
FIG. 6 is a schematic flowchart 1 of a communication method according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic flowchart 4 of a communication method according to an embodiment of this application;
FIG. 10 is a schematic flowchart 5 of a communication method according to an embodiment of this application;
FIG. 11 is a schematic flowchart 6 of a communication method according to an embodiment of this application;
FIG. 12 is a schematic flowchart 7 of a communication method according to an embodiment of this application;
FIG. 13 is a schematic flowchart 8 of a communication method according to an embodiment of this application;
FIG. 14 is a schematic diagram 1 of a structure of a communication apparatus according to an embodiment of this application;
FIG. 15 is a schematic diagram 2 of a structure of a communication apparatus according to an embodiment of this application; and
FIG. 16 is a schematic diagram 3 of a structure of a communication apparatus according to an embodiment of this application.

### DESCRIPTION OF EMBODIMENTS

For ease of understanding, the following first describes technical terms in embodiments of this application.

1. 5th generation (5th generation, 5G) mobile communication system (5G system (5G system, 5GS) for short):

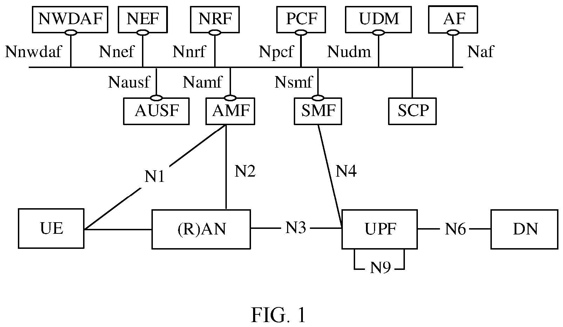

FIG. 1 is a schematic diagram of a 5GS architecture. As shown in FIG. 1, the 5GS includes an access network (access network, AN) and a core network (core network, CN), and may further include a terminal.

The CN may include a user plane function (user plane function, UPF) network element (user plane network element for short), an access and mobility management function (access and mobility management function, AMF) network element, a session management function (session management function, SMF) network element (session management network element for short), an authentication server function (authentication server function, AUSF) network element, a network data analytics function (network data analytics function, NWDAF) network element (network data analytics network element for short), a network exposure function (network exposure function, NEF) network element, a network function storage function (network exposure function Repository Function, NRF) network element, a policy control function (policy control function, PCF) network element (policy control network element for short), a unified data management (unified data management, UDM) network element (data management network element for short), an application function (application function, AF) network element, a service communication proxy (service communication proxy, SCP) network element, or the like.

It should be noted that FIG. 1 merely provides some examples of network elements or entities in a 5G network. The 5G network may further include some network elements or entities that are not shown in FIG. 1, such as a unified data repository (unified data repository, UDR) network element, a network slice selection function (network slice selection function, NSSF) network element, and a charging function (charging function, CHF) network element. This is not specifically limited in this embodiment of this application.

As shown in FIG. 1, a terminal device accesses the 5G network by using an AN device, and communicates with the AMF network element through an N1 interface (N1 for short). ARAN device communicates with the AMF network element through an N2 interface (N2 for short). The RAN device communicates with the UPF network element through an N3 interface (N3 for short). The SMF network element communicates with the UPF network element through an N4 interface (N4 for short), and the UPF network element accesses a data network (data network, DN) through an N6 interface (N6 for short). In addition, a control plane function such as the AUSF network element, the AMF network element, the SMF network element, the NEF network element, the NRF network element, the PCF network element, the UDM network element, the UDR network element, the AF network element, the NWDAF network element, or the SCP network element shown in FIG. 1 performs interaction through a service-based interface. For example, a service-based interface exhibited by the AUSF network element is Nausf, a service-based interface exhibited by the AMF network element is Namf, a service-based interface exhibited by the SMF network element is Nsmf, a service-based interface exhibited by the NEF network element is Nnef, a service-based interface exhibited by the NRF network element is Nnrf, a service-based interface exhibited by the PCF network element is Npcf, a service-based interface exhibited by the UDM network element is Nudm, and a service-based interface exhibited by the AF network element is Naf. In addition, a service-based interface exhibited by the UDR network element is Nudr, a service-based interface exhibited by the NSSF network element is Nnssf, and a service-based interface exhibited by the CHF network element is Nchf. For related function descriptions and interface descriptions, refer to a diagram of a 5G system architecture (5G system architecture) in the 23501 standard. Details are not described herein.

The following separately describes functions of each part or network element in a network architecture in the 5G network by using examples.
(1) The terminal may be a terminal having receiving and sending functions, or may be a chip or a chip system that may be disposed in the terminal. The terminal may also be referred to as user equipment (user equipment, UE), an access terminal, a subscriber unit (subscriber unit), a subscriber station, or a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a hand-held device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal in this application may alternatively be a vehicle-mounted module, a vehicle-mounted assembly, a vehicle-mounted component, a vehicle-mounted chip, or a vehicle-mounted unit that is built in a vehicle as one or more components or units.
(2) The AN network element is configured to implement an access-related function, may provide a network access function for an authorized terminal in a specific area, and can use transmission tunnels having different quality based on levels of terminals, service requirements, and the like. The AN network element forwards a control signal and user data between the terminal and the CN. The AN network element in this application may be a radio access network (radio access network, RAN) network element. The RAN network element can manage a radio resource, provide an access service for the terminal device, and complete forwarding of the control signal and terminal data between the terminal and the core network. The RAN network element may also be understood as a base station in a conventional network. For example, the RAN network element may be responsible for functions such as radio resource management, quality of service (quality of service, QoS) management, and data compression and encryption on an air interface side.
   The RAN network element may be a device in a wireless network. The RAN network element may also be referred to as a wireless RAN network element, a network device, or a wireless network node. Currently, some examples of the RAN network element are: a next generation NodeB (Next Generation NodeB, gNB) in the 5G system, a transmission reception point (transmission reception point, TRP), an evolved NodeB (evolved NodeB, eNB) in a long term evolution (long term evolution, LTE) system, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). In a network structure, the network device may include a central unit (central unit, CU) node, a distributed unit (distributed unit, DU) node, or a RAN network element including a CU node and a DU node. Alternatively, the RAN network element may be a wireless backhaul device, a vehicle-mounted device, a wearable device, a network device in a future 5G network, a network device in a future evolved PLMN network, or the like. In a 3rd generation (3rd generation, 3G) system, the RAN network element is referred to as a NodeB (NodeB), or the like.
(3) The mobility management network element is a core network element, and is mainly responsible for signaling processing, for example, functions such as access control, mobility management, attachment and detachment, and gateway selection. When serving a session of the terminal, the mobility management network element provides a control plane storage resource for the session, to store a session identifier, an SMF network element identifier associated with the session identifier, and the like. In the 5G communication system, the mobility management network element may be an access and mobility management function (access and mobility management function, AMF) network element. In a future communication system, the mobility management network element may still be an AMF network element, or may have another name. This is not limited in this application.
(4) The session management network element is configured to perform session management in a mobile network. For example, the session management network element is responsible for user plane network element selection, user plane network element redirection, internet protocol (internet protocol, IP) address allocation, bearer establishment, modification, and release, and QoS control. The session management network element is configured to: manage a session, allocate and manage an IP address of a terminal, select a termination point that can manage a user plane function and a policy control and charging function interface, notify downlink data, and the like. In the 5G communication system, the session management network element may be an SMF network element. In the future communication system, the session management network element may still be an SMF network element, or may have another name. This is not limited in this application.
(5) The user plane network element is configured to perform packet routing and forwarding, quality of service (quality of service, QoS) processing on user plane data, and the like. In the 5G communication system, a network element or entity corresponding to the user plane network element may be a user plane function (user plane function, UPF) network element in the 5G network architecture. In the future communication system, the user plane network element may still be a UPF network element, or the user plane network element has another name. This is not limited in this embodiment of this application.
(6) The authentication server function network element mainly provides an authentication function, and supports authentication of 3rd generation partnership project (3rd generation partnership project, 3GPP) access and non-3GPP access. For details, refer to 3GPP TS 33.501. In the 5G communication system, the authentication server function network element may be an authentication server function (authentication server function, AUSF) network element. In the future communication system, the authentication server function network element may still be an AUSF network element, or the authentication server function network element has another name. This is not limited in this embodiment of this application.
(7) The data management network element is configured to perform user identifier processing, access authentication, registration, mobility management, or the like. In the 5G communication system, a network element or entity corresponding to the data management network element may be a unified data management (unified data management, UDM) network element in the 5G network architecture. Nudm is a service-based interface provided by the UDM network element, and the UDM network element may communicate with another network function through the Nudm. In the future communication system, the data management network element may still be a UDM network element, or the data management network element has another name. This is not limited in this embodiment of this application.
(8) The network exposure function network element mainly provides a service, to enable a 3rd generation partnership project (3rd generation partnership project, 3GPP) network to securely provide a network service capability to a third-party service provider, namely, an application function network element 207. In the 5G communication system, the network exposure function network element may be a (network exposure function, NEF) network element, and Nnef is a service-based interface provided by the NEF network element. The NEF network element may communicate with another network function through the Nnef. In the future communication system, the network exposure function network element may still be a NEF network element or have another name. This is not limited in this embodiment of this application.
(9) The policy control network element includes a user subscription data management function, a policy control function, a charging policy control function, QoS control, and the like, is configured to guide a unified policy framework of network behavior, and provide policy rule information and the like for a control plane function network element (such as the AMF network element). In the 5G communication system, the policy control network element may be a PCF network element. In the future communication system, the policy control function network element may still be a PCF network element or have another name. This is not limited in this embodiment of this application.
(10) The application function network element is mainly configured to provide application layer information for the 3GPP network. In the 5G communication system, the application function network element 207 may be an application function (application function, AF) network element, and Naf is a service-based interface provided by the AF network element. The AF network element may communicate with another network function through the Naf. In the future communication system, the application function network element may still be an AF network element or have another name. This is not limited in this embodiment of this application. For example, the AF network element may include, for example, a service capability server (service capability server, SCS) or an application server (application server, AS).
(11) The data network refers to an operator network that provides a data transmission service for the terminal, for example, an IMS (IP Multi-media Service, IP multimedia service) or the Internet.
   The terminal accesses the data network by establishing a PDD session, and the session is from the terminal to the RAN network element, the UPF network element, and the DN network element.
(12) The network data analytics function network element is configured to provide network data collection and analytics functions that are based on technologies such as big data and artificial intelligence. In the 5G system, the network data analytics function network element may be an NWDAF network element. In the future communication system, the network data analytics function network element may still be an NWDAF network element, or may have another name. This is not limited in this application.
(13) The slice selection function network element is configured to select a network slice for the terminal, and the like. In the 5G communication system, the slice selection function network element may be an NSSF network element. In the future communication system, the network slice selection function network element may still be an NSSF network element, or may have another name. This is not limited in this embodiment of this application.
(14) The unified data storage network element is mainly responsible for storing structured data, and stored content includes subscription data and policy data, externally exposed structured data, and application-related data. In the 5G communication system, the unified data storage network element may be a UDR network element. In the future communication system, the unified data storage network element may still be a UDR network element, or may have another name. This is not limited in this application.

2. An end-to-end (end to end) delay may also be referred to as a motion to photon (motion to photon, MTP) delay. For example, in a service such as virtual reality (virtual reality, VR), the end-to end delay is a delay from detecting a head motion and/or a hand motion by a terminal to rendering and displaying a corresponding new picture on a screen of the terminal. Alternatively, the end-to end delay is a time length between a moment at which the terminal sends uplink data and a moment at which downlink data (for example, a processing result corresponding to the uplink data) arrives at a terminal device.

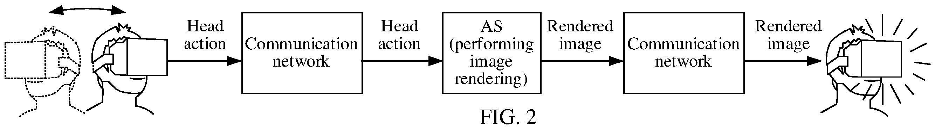

As shown in FIG. 2, in an interactive multimedia service, the terminal collects user-related data, and sends the user-related data to an application server for processing, to obtain processed data from the application server. The VR service is used as an example. In the VR service, the terminal collects action information of a user, for example, information about a head action (for example, a head rotation), a hand action, a squatting action, or a stand-up action, and sends the information to the application server by using a communication network. The application server performs image rendering based on the action information of the user, and sends a rendered image to the terminal by using the communication network, to provide the rendered image for the user to watch. The VR service is used as an example. The terminal may be a VR device, for example, a wearable VR head mounted display, and the end-to-end delay may be the MTP delay. In this process, a delay between collecting the user-related data by the terminal and obtaining the processed data by the terminal is large, affecting user experience.

For example, in an implementation process of the foregoing VR service, to prevent the user from feeling dizzy and ensure user experience, a requirement on the MTP delay, namely, the end-to-end delay, of service data of the VR service is very high. For example, in some VR services, an MTP delay of service data needs to be within 20 milliseconds (millisecond, ms).

For this problem, in a current solution, an air interface transmission delay may be determined based on time and the end-to-end delay. The air interface transmission delay includes an uplink air interface transmission delay between the terminal and a radio access network element and/or a downlink air interface transmission delay between the radio access network element and the terminal. The data sent by the terminal carries uplink sending time. In a delivery process of the data processed by the application server, the application server, a user plane network element, or the like determines a downlink delay budget based on the uplink sending time, and then adjusts an air interface resource of the radio access network element based on the downlink delay budget. The following uses an example in which a communication system includes a terminal, a radio access network device, a user plane network element, and an application server, and service data is transmitted in a form of a data packet.

In data packets transmitted by using the communication network, a data packet from the terminal to the communication network is an uplink data packet, and a data packet from the communication network to the terminal is a downlink data packet. For example, in the VR service, the uplink data packet may include action information transmitted from the terminal to the communication network. The downlink data packet may include rendering information transmitted from the communication network to the terminal.

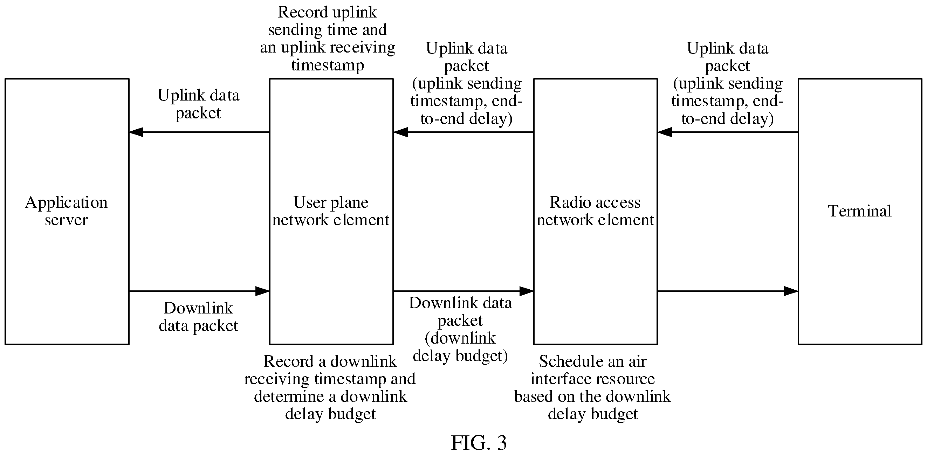

In a possible design solution, as shown in FIG. 3, a terminal sends an uplink data packet, where the uplink data packet carries uplink sending time and an end-to-end delay. A radio access network element receives and sends the uplink data packet from the terminal. A user plane network element receives the uplink data packet from the radio access network element. On the one hand, the user plane network element stores the uplink sending time and the end-to-end delay in the uplink data packet, and obtains a time point at which the uplink data packet is received. On the other hand, the user plane network element sends the uplink data packet to an application server. The application server receives and processes the uplink data packet from the user plane network element, to obtain processed data. The application server sends a downlink data packet, where the downlink data packet includes the processed data. The user plane network element receives the downlink data packet from the application server, and records downlink receiving time of the downlink data packet. The user plane network element determines a delay budget based on the downlink receiving time of the downlink data packet, an end-to-end delay requirement, and the uplink sending time. Then, the user plane network element sends the downlink data packet, where the downlink data packet includes the downlink sending time and a downlink packet delay budget of the downlink data packet. After receiving the downlink data packet, the radio access network element schedules an air interface resource based on the downlink packet delay budget. Clocks of the terminal, the radio access network element, and the user plane network element are synchronized.

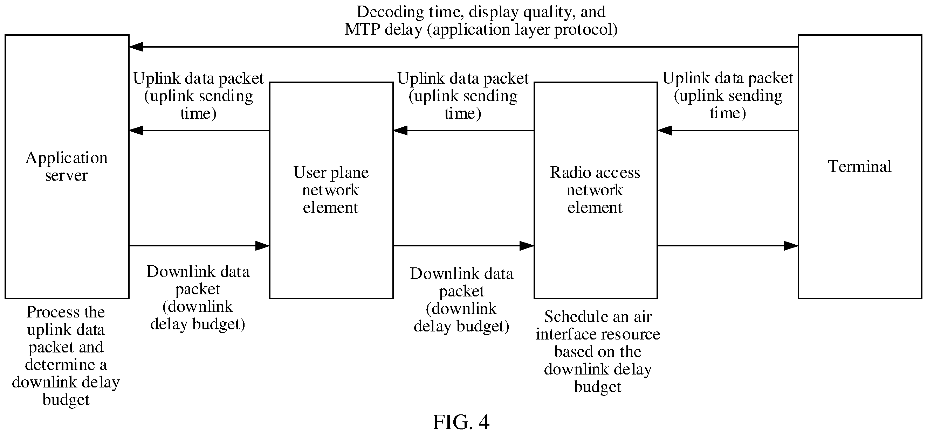

In another possible design solution, as shown in FIG. 4, a terminal may send decoding time, display quality, and an end-to-end delay to an application server by using an application layer. The terminal sends an uplink data packet, where the uplink data packet carries uplink sending time and the end-to-end delay. A radio access network element receives and sends the uplink data packet from the terminal. A user plane network element receives the uplink data packet from the radio access network element, and sends the uplink data packet to the application server. The application server receives the uplink data packet from the user plane network element. On the one hand, the application server obtains a downlink delay budget of the downlink data packet based on the uplink sending time and the end-to-end delay in the uplink data packet. On the other hand, the application server processes the uplink data packet to obtain a processing result of the uplink data packet. The application server sends the downlink data packet, where the downlink data packet includes a processing result and the downlink delay budget. The user plane network element receives the downlink data packet from the application server, and sends the downlink data packet to the radio access network element, where the downlink data packet includes downlink sending time of the downlink data packet and a downlink packet delay budget. After receiving the downlink data packet, the radio access network element schedules an air interface resource based on the downlink packet delay budget. Clocks of the terminal, the radio access network element, the user plane network element and the application server are synchronized.

However, in the foregoing solution, the radio access network element needs to frequently adjust a data processing policy for each piece of downlink data (for example, the downlink data packet), for example, scheduling the air interface resource. Consequently, a data processing process is complex, and it is difficult to ensure processing efficiency and a processing delay.

In conclusion, for the foregoing technical problem, embodiments of this application provide the following technical solutions, to ensure the data processing efficiency and the data processing delay.

The following describes the technical solutions in this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "an example" and "for example" are used to represent giving an example, an illustration, or a description. Any embodiment or design solution described as an "example" in this application should not be explained as being more preferable or having more advantages than another embodiment or design solution. Exactly, the term "example" is used to present a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 4 is first used as an example to describe in detail a communication system to which embodiments of this application are applicable. For example, FIG. 4 is a schematic diagram of an architecture of a communication system to which a communication method according to an embodiment of this application is applicable.

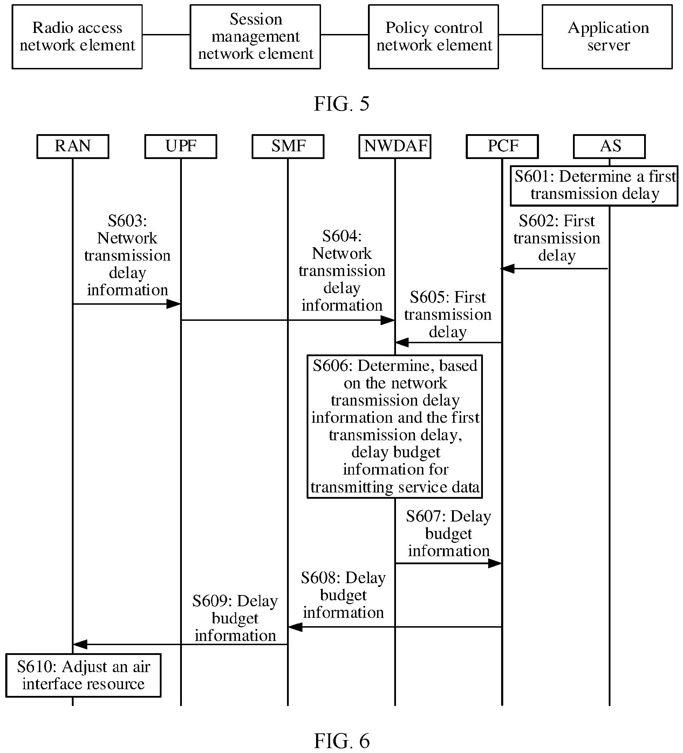

As shown in FIG. 5, the communication system may be applicable to the foregoing 5GS, and includes a radio access network element, a session management network element, a policy control network element, and an application server. The policy control network element may be a PCF network element, and the session management network element may be an SMF network element.

In some possible design solutions, the communication system may further include another network element, for example, a network data analytics function network element, a network exposure function network element, or a user plane network element.

In addition, for related functions of the radio access network element, the session management network element, the policy control network element, the network data analytics function network element, the network exposure function network element, and the user plane network element, refer to related descriptions in the foregoing 5GS. Details are not described again.

The application server may be a device having a data processing function (for example, image rendering) and receiving and sending functions, or a chip or a chip system that may be disposed in the device. Alternatively, the application server may be a system including a device having a data processing function and receiving and sending functions. The application server may also be referred to as a cloud server. In this embodiment of this application, the application server may be configured to process service data.

In this embodiment of this application, the policy control network element may configure, for the radio access network element by using the session management network element, an uplink transmission delay budget and/or a downlink transmission delay budget corresponding to a service, or an uplink transmission delay budget and/or a downlink transmission delay budget that meet/meets a transmission delay requirement of the service. In this way, a terminal or an access network device may adjust, based on an uplink transmission delay and/or a downlink transmission delay, an air interface resource used to transmit the service data, to avoid adjusting an air interface resource for each data packet. In this way, data processing complexity is reduced, and data processing efficiency and a data processing delay are ensured.

It should be noted that, the solutions in embodiments of this application may also be applied to another communication system, and a corresponding name may also be replaced with a name of a corresponding function in the another communication system. The communication system in this embodiment of this application may further include a network structure or a terminal that is not shown in FIG. 4. Details are not described herein again.

For ease of understanding, with reference to FIG. 6 to FIG. 13, the following specifically describes an interaction procedure between the radio access network element, the session management network element, the policy control network element, and the application server by using method embodiments. In the following method embodiment, an example in which a radio access network element is a RAN network element, a session management network element is an SMF network element, and a policy control network element is a PCF network element is used for description.

### Scenario 1:

For example, FIG. 6 is a schematic flowchart 1 of a communication method according to an embodiment of this application. In Scenario 1, a PCF network element may receive, from an NWDAF network element based on a first transmission delay that is determined by an AS and that is used to represent a round-trip transmission latency requirement of service data, delay budget information used to transmit the service data, and send the delay budget information to an SMF network element. The delay budget information indicates an uplink transmission delay budget and/or a downlink transmission delay budget. The SMF network element configures the delay budget information for a RAN network element, and a RAN schedules an air interface resource based on the delay budget information.

Specifically, as shown in FIG. 6, a procedure of the communication method is as follows:
S601: An AS determines a first transmission delay.

The first transmission delay is used to represent a round-trip transmission latency requirement of service data in a network.

The service data may include data transmitted by a terminal to the AS and data transmitted by the AS to the terminal. For example, in a VR service, the service data may include action information and rendering information in the VR service.

A round-trip transmission latency, namely, a network transmission latency, may be a sum of a delay of transmitting the service data from the terminal to the AS and a delay of transmitting the service data from the AS to the terminal. For example, in the VR service, the round-trip transmission latency may be a sum of a delay of transmitting the action information from the terminal to the AS and a delay of transmitting the rendering information from the AS to the terminal. The round-trip transmission latency meets the following relationship: round-trip transmission latency = service end-to-end delay - terminal processing delay - application server processing delay.

The end-to-end delay is related to a service. In other words, the end-to-end delay may be determined based on the service. For example, in the VR service, to prevent a user from feeling dizzy, the end-to-end delay may be 20 ms. The terminal processing delay is a delay of processing the service data by the terminal, and may be obtained from the terminal. For example, the AS interacts with the terminal at an application layer, to obtain the terminal processing delay. The application server processing delay (hereinafter referred to as an AS processing delay) may be determined based on a processing delay that is on the AS and that is of the service data that has been transmitted. For example, the AS processing delay may be an average value of the processing delays that are on the AS and that are of the service data that has been transmitted. This is not specifically limited herein. The AS processing delay may be determined based on a current load of the AS. For example, the AS may determine the AS processing delay based on a correspondence between the AS processing delay and the current load of the AS. This is not specifically limited herein.

The round-trip transmission latency requirement may be a range of a round-trip transmission latency that meets a service requirement, namely, a range of the sum of the delay of transmitting the service data from the terminal to the AS and the delay of transmitting the service data from the AS to the terminal. For example, in the VR service, the round-trip transmission latency requirement may be a range of the sum of the delay of transmitting the action information from the terminal to the AS and the delay of transmitting the rendering information from the AS to the terminal.

The first transmission delay may be a maximum round-trip transmission latency that meets the round-trip transmission latency requirement of the service data.

In this way, in this embodiment of this application, that the AS determines the first transmission delay may be that the AS determines the round-trip transmission latency based on one or more of the service end-to-end delay, the terminal processing delay, and the AS processing delay. An example in which the AS determines the round-trip transmission latency based on the service end-to-end delay, the terminal processing delay, and the application server processing delay is used. The first transmission delay requirement meets the following relationship: first transmission delay = service end-to-end delay - terminal processing delay - application server processing delay.

To reduce a frequency of sending the first transmission delay to a PCF network element by the AS, and further improve data processing efficiency, a transmission delay threshold may be set in the AS. In some possible designs, the first transmission delay may be greater than or equal to the transmission delay threshold. In other words, the first transmission delay is the maximum round-trip transmission latency corresponding to the round-trip transmission latency requirement of the service data, and is greater than or equal to the transmission delay threshold.

In some possible designs, a processing delay threshold may be set in the AS. If the AS processing delay changes from a delay greater than the processing delay threshold to a delay less than or equal to the processing delay threshold, the first transmission delay is determined based on the changed AS processing delay. In this case, first transmission delay = service end-to-end delay - changed AS processing delay - terminal processing delay.

The processing delay threshold may be 20 ms, 30 ms, or 40 ms. A specific implementation may be determined based on service data processed by the application server, and details are not described herein again.

S602: The AS sends the first transmission delay to the PCF network element. Correspondingly, the PCF network element receives the first transmission delay from the AS.

The first transmission delay may be exchanged through an interface between the AS and the PCF network element, or may be forwarded by using another network element (for example, a network capability exposure network element NEF). This is not limited in this application.

It should be noted that the AS may alternatively send a transmission delay requirement to the PCF network element by using another network element such as the NEF network element. This is not limited herein.

It should be noted that the AS may have a plurality of services, which may include a service that needs end-to-end delay assurance (end-to-end delay requirement) and/or a service that does not need the end-to-end delay assurance. The PCF network element may determine, based on whether a message sent by the AS carries the first transmission delay, whether delay budget information needs to be further determined. Optionally, the PCF network element may send a request message to a related network element (for example, an SMF network element, a UPF network element, or a RAN network element), to request the related network element to send network transmission delay information to the NEF network element (or the PCF network element). The network transmission delay information may be used by the PCF network element to determine the delay budget information.

S603: The RAN network element sends the network transmission delay information to the UPF network element. Correspondingly, the UPF network element receives the transmission delay information from the RAN network element.

The network transmission delay information indicates an uplink transmission delay supported by the network and/or a downlink transmission delay supported by the network.

For example, the uplink transmission delay supported by the network may include an uplink air interface transmission delay supported by the network and an uplink transmission delay between the UPF network element and the RAN network element, for example, an uplink transmission delay of an N3 interface. The downlink transmission delay supported by the network may include a downlink air interface transmission delay supported by the network and a downlink transmission delay between the UPF network element and the RAN network element, for example, a downlink transmission delay of the N3 interface. Uplink transmission delay supported by the network = uplink air interface transmission delay supported by the network + uplink transmission delay between the UPF network element and the RAN network element (uplink transmission delay of the N3 interface). Downlink transmission delay supported by the network = downlink air interface transmission delay supported by the network + downlink transmission delay between the UPF network element and the RAN network element (downlink transmission delay of the N3 interface).

The network transmission delay information may be obtained by collecting statistics on an uplink transmission delay and/or a downlink transmission delay within preset duration. The uplink air interface transmission delay supported by the network may be obtained by collecting statistics on an uplink air interface transmission delay within the preset duration. For example, the preset duration is 1 second (second, s). If a maximum uplink air interface transmission delay of the service data within 1 second is 6 ms, the uplink air interface transmission delay supported by the network is 0 ms to 6 ms. Alternatively, the uplink air interface transmission delay supported by the network may be obtained based on a resource status. For example, an uplink air interface transmission delay needed for transmitting a piece of service data is determined based on a quantity of currently accessed service flows, a bandwidth requirement of each service flow, and a currently available air interface resource. Alternatively, the network transmission delay information may be obtained based on a resource status. For example, an uplink air interface transmission delay needed for transmitting a piece of service data is determined based on a quantity of currently accessed service flows, a bandwidth requirement of each service flow, and a currently available air interface resource. Alternatively, the network transmission delay information may be obtained by preconfiguring a parameter. For example, the RAN network element preconfigures the uplink transmission delay between the UPF network element and the RAN network element, for example, the uplink transmission delay of an N3 interface. When the user moves to a new RAN network element, the new RAN network element reports, to the UPF network element, the preconfigured uplink transmission delay between the UPF network element and the RAN network element, for example, the uplink transmission delay of the N3 interface. Alternatively, the network transmission delay information may be obtained through real-time measurement of data packets one by one. For example, the RAN network element may measure a transmission delay of each uplink data packet in real time by using time (for example, a timestamp) carried in the uplink data packet, and report an uplink air interface transmission delay obtained through the real-time measurement.

Similarly, the downlink air interface transmission delay supported by the network may be obtained by collecting statistics on the uplink transmission delay and/or the downlink transmission delay within the preset duration, may be obtained based on the resource status, may be obtained by preconfiguring a parameter, or may be obtained through the real-time measurement of data packets one by one. The network transmission delay information may be carried in a general packet radio service tunneling protocol for the user plane (general packet radio service tunneling protocol for the user plane, GTP-U) data packet header.

In S603, the RAN network element may send the network transmission delay information based on a request message sent by the PCF network element or the SMF network element. The request message may be sent by the PCF network element when receiving the first transmission delay from the AS, or may be sent by the SMF network element after receiving the request message from the PCF. Alternatively, the RAN network element may send the network transmission delay information according to a delay reporting policy described in Scenario 4 or Scenario 5 of this application.

S604: The UPF network element sends the network transmission delay information to an NWDAF network element. Correspondingly, the NWDAF network element receives the network transmission delay information from the UPF network element.

The network transmission delay information may be carried in a service-based interface message between the UPF network element and the NWDAF network element.

S605: The PCF network element sends the first transmission delay to the NWDAF network element.

The first transmission delay may be carried in a service-based interface message between the PCF network element and the NWDAF network element.

S606: The NWDAF network element determines, based on the network transmission delay information and the first transmission delay, delay budget information for transmitting the service data.

The delay budget information indicates an uplink transmission delay budget and/or a downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data.

For example, if the service has uplink service data, the delay budget information may indicate the uplink transmission delay budget for transmitting the service data; if the service has downlink service data, the delay budget information indicates the downlink transmission delay budget for transmitting the service data; or if the service has uplink service data and downlink service data that need to be transmitted, the delay budget information may indicate the uplink transmission delay budget for transmitting the service data and the downlink transmission delay budget for transmitting the service data. For example, the delay budget information may carry an uplink air interface delay budget, and indicate the uplink transmission delay budget by using the uplink air interface delay budget and the uplink transmission delay between the UPF network element and the RAN network element, for example, the uplink transmission delay of the N3 interface. Uplink transmission delay budget = uplink air interface delay budget + uplink transmission delay between the UPF network element and the RAN network element (for example, the uplink transmission delay of the N3 interface). The delay budget information may carry a downlink air interface transmission delay, and indicate the downlink transmission delay budget by using the downlink air interface transmission delay budget and the downlink transmission delay between the UPF network element and the RAN network element, for example, the downlink transmission delay of the N3 interface. Downlink transmission delay budget = downlink air interface transmission delay budget + downlink transmission delay between the UPF network element and the RAN network element (for example, the downlink transmission delay of the N3 interface).

For example, the NWDAF network element determines the delay budget information based on one piece of network transmission delay information that is in the network transmission delay information and whose round-trip transmission latency is less than or equal to the first transmission delay. For example, if the network transmission delay information indicates that the uplink transmission delay is 3 ms to 5 ms, the downlink transmission delay is 5 ms to 15 ms, and the first transmission delay is 20 ms, the NWDAF network element may determine that the transmission budget information is: uplink transmission delay budget = 4 ms, and downlink transmission delay budget = 16 ms.

S607: The NWDAF network element sends the delay budget information to the PCF network element. Correspondingly, the PCF network element receives the delay budget information from the NWDAF network element.

In this way, the PCF network element receives the delay budget information from the NWDAF network element, so that overheads of a policy control network element can be reduced and running efficiency can be improved.

S608: The PCF network element sends the delay budget information to the SMF network element. Correspondingly, the SMF network element receives the delay budget information from the PCF network element.

The delay budget information may be carried in a QoS policy, to reuse an existing information element, reduce communication overheads, and improve communication efficiency. Certainly, the delay budget information may alternatively be carried in any other possible information element. This is not specifically limited herein.

Optionally, the PCF network element may further send the delay reporting policy to the SMF network element, to indicate the SMF network element to report the network transmission delay information according to the delay reporting policy, to determine the delay budget information. The delay reporting policy may be at least one of a reporting periodicity, a reporting delay threshold, or a reported event. For details, refer to related descriptions in the following Scenario 4 or Scenario 5. Details are not described again. The delay reporting policy may be configured based on a service type and/or a service delay requirement.

For example, if a delay requirement change of a service (one or more services) of a same terminal within 5 minutes does not exceed a delay currently supported by the network, the reporting periodicity may be 5 minutes.

For another example, if the service delay requirement is A, to ensure the service delay requirement, the round-trip transmission latency of the network is adjusted in a timely manner, to avoid that the round-trip transmission latency of the network exceeds A. In this case, the reporting delay threshold may be a delay less than or equal to A. It may be understood that the reporting delay threshold may alternatively be determined based on the air interface uplink transmission delay or determined based on the uplink transmission delay.

For another example, if the service delay requirement is A, the reported event may be that the network does not support the service delay requirement, for example, a radio access network element cannot support received delay budget information.

Optionally, the PCF network element may further send a delay reporting indication to the SMF network element, to indicate the SMF network element to report the network transmission delay information, to determine the delay budget information. The SMF network element may autonomously determine the delay reporting policy based on the delay reporting indication, and report the network transmission delay information. In other words, the delay reporting indication is used to trigger the SMF network element to determine the delay reporting policy and send the network transmission delay information according to the delay reporting policy. It should be noted that the delay reporting indication may be the request message in S603. For specific implementation, refer to related descriptions of S603. Details are not described herein again.

A principle of determining the delay reporting policy by the SMF network element is similar to a principle of determining the delay reporting policy by the PCF network element. For details, refer to the principle of determining the delay reporting policy by the PCF network element. Details are not described again.

S609: The SMF network element sends the delay budget information to the RAN network element. Correspondingly, the RAN network element receives the delay budget information from the SMF network element.

The delay budget information may be carried in the QoS policy, to reuse the existing information element, reduce the communication overheads, and improve the communication efficiency. Certainly, the delay budget information may alternatively be carried in any other possible information element. This is not specifically limited herein.

In this way, the policy control network element determines the delay budget information based on the first transmission delay, and sends the delay budget information to a session management network element. For example, the policy control network element may send the delay budget information to the radio access network element by using the session management network element, to update the delay budget information of the radio access network element.

S610: The RAN network element adjusts an air interface resource based on the delay budget information.

The RAN network element may adjust the air interface resource based on a correspondence between the delay budget information and the air interface resource, to enable the air interface resource to match the delay budget information, so that the network transmission delay can meet a service end-to-end delay requirement. For example, the RAN network element may allocate abundant uplink air interface transmission resources or downlink air interface transmission resources to the service data based on the delay budget information, to enable the service data to be sent within a given transmission delay budget.

### Scenario 2:

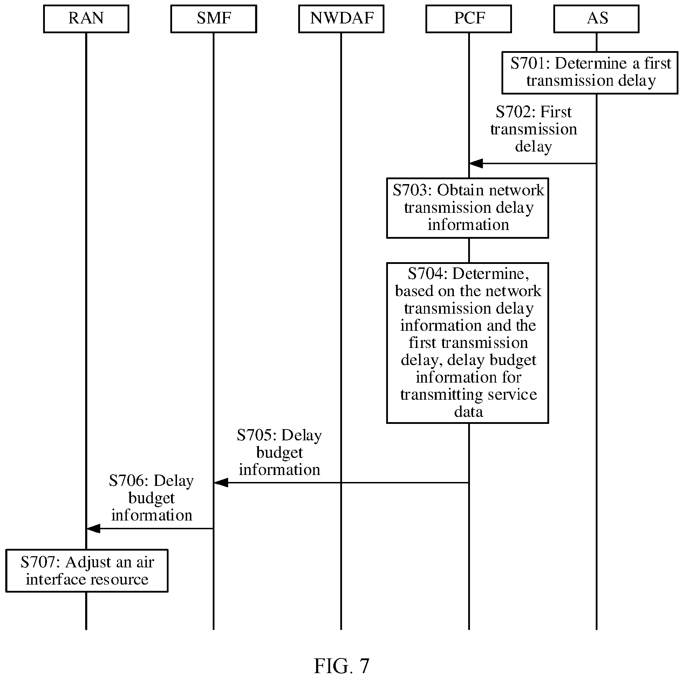

For example, FIG. 7 is a schematic flowchart 2 of a communication method according to an embodiment of this application. In Scenario 2, a PCF network element may receive a first transmission delay that is determined by an AS and that is used to represent a round-trip transmission latency requirement of service data. The PCF network element autonomously determines, based on a first transmission delay requirement and network transmission delay information, delay budget information used to transmit the service data, and sends the delay budget information to an SMF network element. The delay budget information indicates an uplink transmission delay budget and/or a downlink transmission delay budget. The SMF network element configures the uplink transmission delay budget and/or the downlink transmission delay budget for a RAN network element. In other words, compared with Scenario 1 in which the PCF network element receives the delay budget information from the NWDAF network element, in Scenario 2, the PCF network element autonomously determines the delay budget information based on the network transmission delay information.

Specifically, as shown in FIG. 7, a procedure of the communication method is as follows:
S701: An AS determines a first transmission delay.

The first transmission delay is used to represent a round-trip transmission latency requirement of service data in a network.

The service data may include data transmitted by a terminal to the AS and data transmitted by the AS to the terminal. For a specific implementation principle, refer to related descriptions of S601. Details are not described again.

The round-trip transmission latency requirement may be a limitation on a round-trip transmission latency. For a specific implementation principle, refer to related descriptions of S601. Details are not described again.

The first transmission delay may be a maximum round-trip transmission latency that meets the round-trip transmission latency requirement.

For a specific implementation principle of S701, refer to related descriptions of S601. Details are not described again.

S702: The AS sends the first transmission delay to a PCF network element. Correspondingly, the PCF network element receives the first transmission delay from the AS.

For a specific implementation principle of S702, refer to related descriptions of S602. Details are not described again.

S703: The PCF network element obtains a network transmission delay.

The network transmission delay information indicates an uplink transmission delay supported by the network and/or a downlink transmission delay supported by the network. For a specific implementation principle, refer to related descriptions of S603. Details are not described again.

The PCF network element may obtain the network transmission delay information from an SMF network element or an NWDAF network element. In other words, the PCF network element receives network transmission delay information from the SMF network element or the NWDAF network element, to obtain the network transmission delay information.

It should be noted that the network transmission delay information of the SMF network element may be from a RAN network element. For example, the network transmission delay information may be first sent by a RAN to a UPF network element, and then sent by the UPF network element to the SMF network element. The network transmission delay information of the NWDAF network element may also be from the RAN network element. For example, the network transmission delay information may be first sent by the RAN network element to the UPF network element, and then sent by the UPF network element to the NWDAF network element.

S704: The PCF network element determines delay budget information based on the network transmission delay information and the first transmission delay.

The delay budget information indicates an uplink transmission delay budget and/or a downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data. For a specific implementation principle of the delay budget information, refer to related descriptions of S606. Details are not described again. A difference lies in that the PCF network element may further receive, from the UPF network element, an uplink transmission delay between the UPF network element and the RAN network element, for example, an uplink transmission delay of an N3 interface, and a downlink transmission delay between the UPF network element and the RAN network element, for example, a downlink transmission delay of the N3 interface. In other words, the uplink transmission delay between the UPF network element and the RAN network element and/or the downlink transmission delay between the UPF network element and the RAN network element may be obtained by the PCF network element from the UPF network element.

A principle of determining the delay budget information by the PCF network element in S704 is similar to a principle of determining the delay budget information by the NWDAF network element in S606. For a specific implementation principle, refer to related descriptions of S606. Details are not described again.

In this way, a policy control network element determines the delay budget information based on the first transmission delay and the network transmission delay information, so that dependence on another network element other than the policy control network element can be reduced and adaptability can be improved.

S705: The PCF network element sends the delay budget information to the SMF network element. Correspondingly, the SMF network element receives the delay budget information from the PCF network element.

For a specific implementation principle of S705, refer to related descriptions of S608. Details are not described again.

S706: The SMF network element sends the delay budget information to the RAN network element. Correspondingly, the RAN network element receives the delay budget information from the SMF network element.

For a specific implementation principle of S706, refer to related descriptions of S609. Details are not described again.

S707: The RAN network element adjusts an air interface resource based on the delay budget information.

For a specific implementation principle and technical effects of S707, refer to related descriptions of S610. Details are not described again.

### Scenario 3:

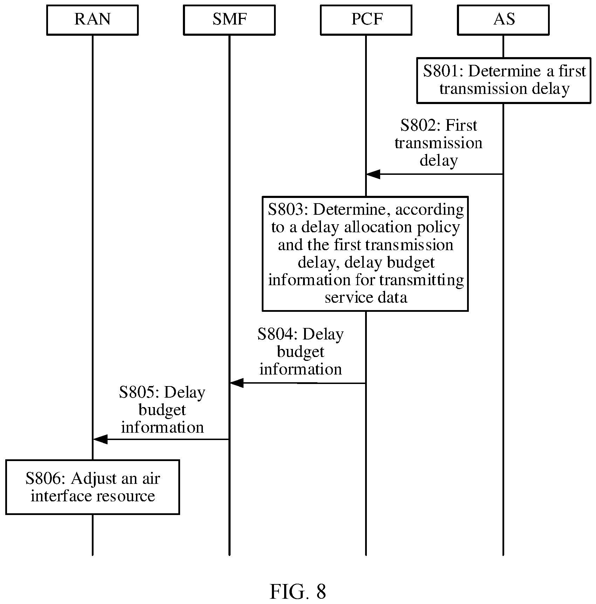

For example, FIG. 8 is a schematic flowchart 3 of a communication method according to an embodiment of this application. In Scenario 3, a PCF network element may receive, from an AS, a first transmission delay that is used to represent a round-trip transmission latency requirement of service data in a network. The PCF network element autonomously determines, according to a first transmission delay requirement and a delay allocation policy, delay budget information used to transmit the service data, and sends the delay budget information to an SMF network element. The delay budget information indicates an uplink transmission delay budget and/or a downlink transmission delay budget. The SMF network element configures the uplink transmission delay budget and/or the downlink transmission delay budget for a RAN network element. Compared with Scenario 1 and Scenario 2 in which the delay budget information is determined based on the network transmission delay information, in Scenario 3, the delay budget information may be autonomously determined according to the delay allocation policy, to avoid using the network transmission delay information to determine the delay budget information, so that a procedure of determining the delay budget information is simplified and communication efficiency is improved.

Specifically, as shown in FIG. 8, a procedure of the communication method is as follows:
S801: An AS determines a first transmission delay.

The first transmission delay is used to represent a round-trip transmission latency requirement of service data in a network.

The service data may include data transmitted by a terminal to the AS and data transmitted by the AS to the terminal. For a specific implementation principle, refer to related descriptions of S701. Details are not described again.

The round-trip transmission latency requirement may be a range of a round-trip transmission latency that meets a service requirement. For a specific implementation principle, refer to related descriptions of S701. Details are not described again.

The first transmission delay may be a maximum round-trip transmission latency that meets the round-trip transmission latency requirement.

For a specific implementation principle of S801, refer to related descriptions of S601 or S701. Details are not described again.

S802: The AS sends the first transmission delay to a PCF network element. Correspondingly, the PCF network element receives the first transmission delay from the AS.

For a specific implementation principle of S802, refer to related descriptions of S602 or 702. Details are not described again.

S803: The PCF network element determines, according to a delay allocation policy and the first transmission delay, delay budget information for transmitting the service data.

The delay allocation policy indicates an association relationship, for example, a proportion, between an uplink transmission delay budget and a downlink transmission delay budget.

The delay distribution policy may be configured on the PCF network element. Alternatively, the delay distribution policy may be obtained by the PCF network element from another network element, for example, obtained by the PCF network element from an SMF network element after receiving the first transmission delay. The delay budget information indicates the uplink transmission delay budget and/or the downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data. For a specific implementation principle of the delay budget information, refer to related descriptions of S606 or S704. Details are not described again.

For example, the first transmission delay is 20 ms. If the delay allocation policy configured on the PCF indicates that the proportion between the uplink transmission delay budget and the downlink transmission delay budget is 1:3, the uplink transmission delay is 5 ms, and the downlink transmission delay is 15 ms.

In this way, a process of determining the delay budget information can be simplified, so that overheads of a policy control network element can be reduced and running efficiency can be improved.

S804: The PCF network element sends the delay budget information to the SMF network element. Correspondingly, the SMF network element receives the delay budget information from the PCF network element.

For a specific implementation principle of S804, refer to related descriptions of S608 or S705. Details are not described again.

S805: The SMF network element sends the delay budget information to a RAN network element. Correspondingly, the RAN network element receives the delay budget information from the SMF network element.

For a specific implementation principle of S805, refer to related descriptions of S609 or S706. Details are not described again.

S806: The RAN network element adjusts an air interface resource based on the delay budget information.

For a specific implementation principle and technical effects of S806, refer to related descriptions of S610 or S707. Details are not described again.

### Scenario 4:

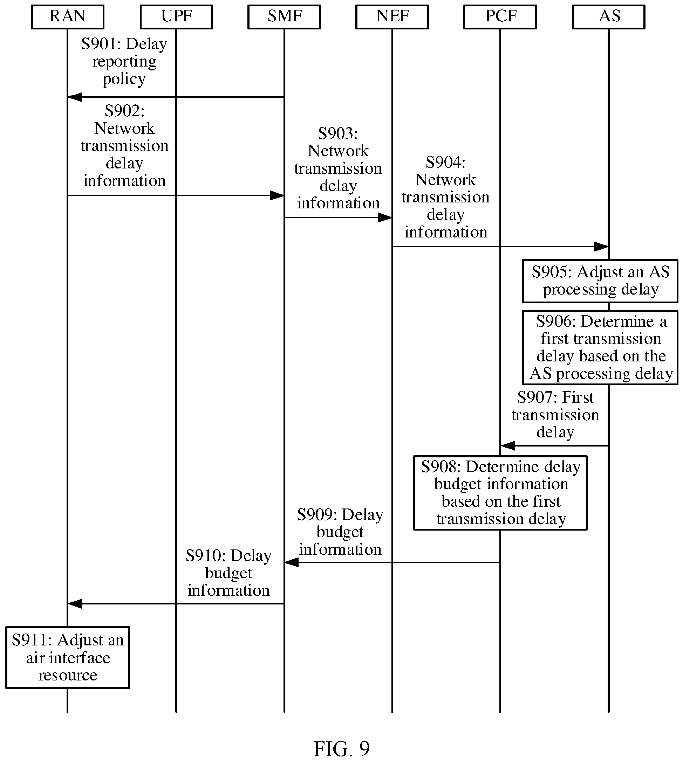

For example, FIG. 9 is a schematic flowchart 4 of a communication method according to an embodiment of this application. In Scenario 4, a RAN network element or a UPF network element may receive a delay reporting policy from an SMF network element, the RAN network element or the UPF network element may send network transmission delay information to the SMF network element according to the delay reporting policy from the SMF network element, and the SMF network element sends the network transmission delay information to a NEF network element or a PCF network element. The NEF network element or the PCF network element sends the network transmission delay information to an AS, and the AS determines a first transmission delay based on the network transmission delay information, to adjust an air interface resource of a RAN. It may be understood that the delay reporting policy in Scenario 4 may be carried in the delay budget information sent by the SMF network element to the RAN network element in Scenario 1 to Scenario 3.

S901: An SMF network element sends a delay reporting policy to a RAN network element. Correspondingly, the RAN network element receives the delay reporting policy from the SMF network element.

The delay reporting policy may include a sending rule of network transmission delay information, and the sending rule may include a reporting periodicity and a reporting delay threshold.

For example, the reporting periodicity may be 2 minutes or 5 minutes. The reporting delay threshold may be determined based on an air interface uplink transmission delay or may be determined based on an uplink transmission delay. Using the air interface uplink transmission delay as an example, the reporting delay threshold may be 5 ms, 7 ms, or 9 ms.

The delay reporting policy may be carried in a QoS policy. For example, the delay reporting policy and the delay budget information in S609, S706, or S805 may be carried in a same QoS policy. It should be noted that the delay reporting policy may alternatively be carried in another information element, for example, in separate delay reporting policy indication information. This is not limited herein.

Optionally, the SMF network element may receive the delay reporting policy from a PCF network element, or may determine the delay reporting policy based on a delay reporting indication sent by the PCF network element, and send the delay reporting policy to the RAN network element. For a specific implementation principle, refer to related descriptions of S608. Details are not described again.

S902: The RAN network element sends the network transmission delay information to the SMF network element according to the delay reporting policy. Correspondingly, the SMF network element receives the network transmission delay information from the RAN network element.

The network transmission delay information indicates an uplink transmission delay supported by a network and/or a downlink transmission delay supported by the network. For a specific implementation principle, refer to related descriptions of S603. Details are not described again.

The network transmission delay information sent by the RAN network element may be carried in a GTP-U data packet header.

In this way, a radio access network element may send the network transmission delay information according to the sending rule in the delay reporting policy, to reduce a frequency of sending the network transmission delay information and a frequency of updating the first transmission delay, so that data processing complexity can be reduced and data processing efficiency is improved.

If the delay reporting policy includes the reporting periodicity, the RAN network element may send the network transmission delay information to the SMF network element at an interval of a time length of each reporting periodicity, to reduce the frequency of sending the network transmission delay information and the frequency of updating the first transmission delay, so that data processing complexity can be reduced and data processing efficiency is improved.

If the delay reporting policy includes the reporting delay threshold, the RAN network element may send the network transmission delay information to the SMF network element based on the reporting delay threshold, to reduce the frequency of sending the network transmission delay information and the frequency of updating the first transmission delay, so that data processing complexity can be reduced and data processing efficiency is improved. For example, if the reporting delay threshold is determined based on the air interface uplink transmission delay, and the reporting delay threshold is 5 ms, in the network transmission delay information, when the air interface uplink transmission delay is greater than or equal to 5 ms, the RAN network element may send the network transmission delay information to the SMF network element.

It may be understood that a function of S901 or S902 may alternatively be implemented by a UPF network element. Details are not described herein again. The network transmission delay information sent by the UPF network element to the SMF network element may be carried in an N4 interface message between an SMF and a UPF.

In this way, when the delay reporting policy includes the reporting periodicity or the reporting delay threshold, the frequency of sending the network transmission delay information may be reduced, so that a network load is reduced. In addition, the frequency of determining the first transmission delay may be further reduced, so that a data processing volume can be further reduced and the data processing efficiency is improved.

S903: The SMF network element sends the network transmission delay information to a NEF network element. Correspondingly, the NEF network element receives the network transmission delay information.

The network transmission delay information may be carried in a service-based interface message between the SMF network element and the NEF network element.

It should be noted that in this embodiment of this application, if the RAN network element or the UPF network element reports the network transmission delay information based on the reporting periodicity, in this case, the SMF network element may send the network transmission delay information to the NEF network element based on the delay reporting threshold. In other words, the SMF network element may filter the network transmission delay information based on the delay reporting threshold. For a specific implementation principle, refer to an implementation principle of sending the network transmission delay information by the RAN network element based on the delay reporting threshold in S901. Details are not described herein again.

S904: The NEF network element sends the network transmission delay information to an AS. Correspondingly, the AS receives the network transmission delay information from a NEF.

The network transmission delay information may be carried in a service-based interface message between an AS network element and the NEF network element.

S905: The AS adjusts an AS processing delay based on the network transmission delay information.

For example, if the network transmission delay information indicates that the uplink transmission delay is 3 ms to 5 ms, the downlink transmission delay is 5 ms to 10 ms, and the first transmission delay is 20 ms, an adjusted AS processing delay may be less than or equal to 12 ms.

S906: The AS determines the first transmission delay based on the AS processing delay.

It may be understood that the AS processing delay in S906 is an adjusted AS delay in S905.

For a specific implementation principle of S906, refer to related descriptions of S601, S701, or S801. Details are not described again.

S907: The AS sends the first transmission delay to the PCF network element. Correspondingly, the PCF network element receives the first transmission delay from the AS.

For a specific implementation principle of S907, refer to related descriptions of S602, S702, or S802. Details are not described again.

S908: The PCF network element determines the delay budget information based on the first transmission delay.

The delay budget information indicates an uplink transmission delay budget and/or a downlink transmission delay budget. In other words, the delay budget information indicates the uplink transmission delay budget for transmitting service data; the delay budget information indicates the downlink transmission delay budget for transmitting service data; or the delay budget information indicates the uplink transmission delay budget and the downlink transmission delay budget for transmitting service data. For a specific implementation principle of the delay budget information, refer to related descriptions of S604. Details are not described again.

For a specific implementation principle of S908, refer to related descriptions of S605 to S607, S704, or S803. Details are not described again. The network transmission delay information in S908 may be the network transmission delay information in S902, and the delay information may be obtained, by a related network element, from the RAN network element or the SMF network element.

S909: The PCF network element sends the delay budget information to the SMF network element. Correspondingly, the SMF network element receives the delay budget information from the PCF network element.

For a specific implementation principle of S909, refer to related descriptions of S608, S705, or S804. Details are not described again.

S910: The SMF network element sends the delay budget information to the RAN, and correspondingly, the RAN network element receives the delay budget information from the SMF.

For a specific implementation principle of S910, refer to related descriptions of S609, S706, or S805. Details are not described again.

S911: The RAN adjusts an air interface resource based on the delay budget information.

For a specific implementation principle and technical effects of S911, refer to related descriptions of S610, S707, or S806. Details are not described again.

In addition, a function of the NEF network element in steps S903 and S904 may be alternatively implemented by the PCF network element. Details are not described herein again.

### Scenario 5:

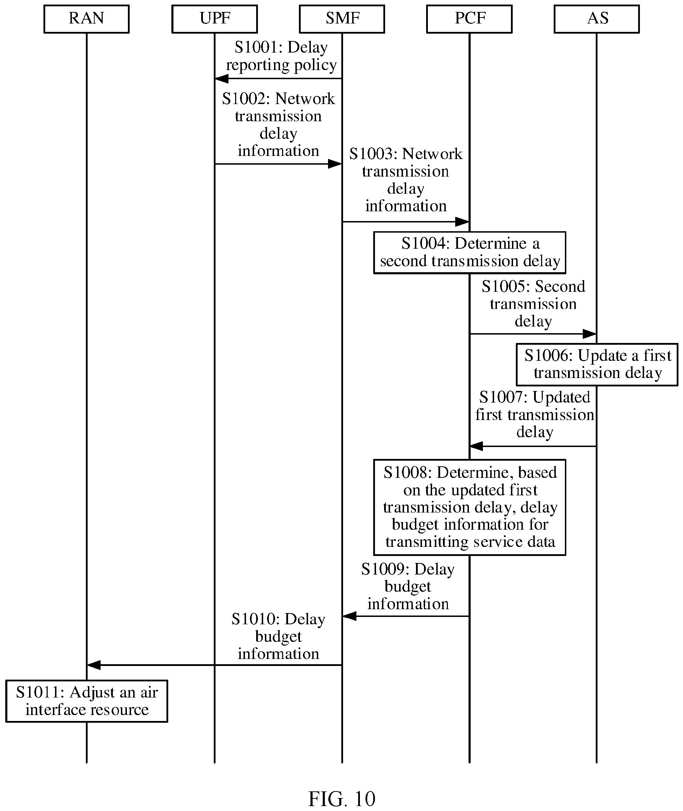

For example, FIG. 10 is a schematic flowchart 5 of a communication method according to an embodiment of this application. In Scenario 5, if a RAN network element receives a delay reporting policy from an SMF network element, the RAN network element may report network transmission delay information according to the delay reporting policy from the SMF network element. A PCF determines, based on the network transmission delay information, that a network cannot support a delay indicated by the delay budget information obtained according to the method in Scenario 1 to Scenario 4. In this way, the PCF may update a first transmission delay based on the network transmission delay information, and re-determine the delay budget information.

S1001: An SMF network element sends a delay reporting policy to a UPF network element. Correspondingly, the UPF network element receives the delay reporting policy from the SMF network element.

The delay reporting policy may include a sending rule of network transmission delay information, and the sending rule may include a reported event. The reported event may be that a radio access network element cannot support received delay budget information. In other words, the radio access network element cannot support an uplink transmission delay budget and/or a downlink transmission delay budget indicated by the delay budget information.

The delay reporting policy may be carried in a QoS policy. For example, the delay reporting policy and the delay budget information in S609, S706, or S805 may be carried in a same QoS policy. It should be noted that the delay reporting policy may alternatively be carried in another information element, for example, in a separate delay reporting policy indication information. This is not limited herein. For a specific implementation principle of the delay budget information, refer to related descriptions of S606. Details are not described again.

Optionally, the SMF network element may receive the delay reporting policy from a PCF network element, or may determine the delay reporting policy based on a delay reporting indication sent by the PCF network element, and send the delay reporting policy to the UPF network element. For a specific implementation principle, refer to related descriptions of S608. Details are not described again.

S1002: The UPF network element sends the network transmission delay information according to the delay reporting policy. Correspondingly, the SMF network element receives the network transmission delay information from the UPF network element.

The network transmission delay information indicates an uplink transmission delay supported by a network and/or a downlink transmission delay supported by the network. For a specific implementation principle, refer to related descriptions of S603. Details are not described again.

The network transmission delay information may be carried in an N4 interface message between the SMF network element and the UPF network element.

For example, the UPF network element may obtain the network transmission delay information from a RAN network element, and send the network transmission delay information to the SMF network element when detecting that the radio access network element cannot support the received delay budget information.

It may be understood that a function of S 1001 or S 1002 may alternatively be implemented by the RAN network element. Details are not described herein again. The network transmission delay information sent by the RAN network element may be carried in a GTP-U data packet header.

In this way, when the delay reporting policy is the reported event, the network transmission delay information may be sent in a case in which the radio access network element cannot support the received delay budget information, to reduce a frequency of sending the network transmission delay information, and reduce a network load. In addition, a frequency of determining a first transmission delay may be further reduced, so that a data processing volume may be further reduced, and data processing efficiency is improved.

S1003: The SMF network element sends the network transmission delay information to the PCF network element. Correspondingly, the PCF network element receives the network transmission delay information.

The network transmission delay information may be carried in a service-based interface message between the SMF network element and the PCF network element.

S 1004: The PCF network element determines a second transmission delay based on the network transmission delay information.

The second transmission delay is determined based on the uplink transmission delay supported by the network and/or the downlink transmission delay supported by the network in the network transmission delay information. For example, if the network transmission delay information indicates that the uplink transmission delay supported by the network is 3 ms to 5 ms, and the downlink transmission delay supported by the network is 5 ms to 15 ms, the second transmission delay is 8 ms to 20 ms.

The PCF network element may perform S1004 when it is difficult to meet a service requirement by updating the delay budget information (adjusting only the delay budget information). In other words, the PCF network element may perform S1004 when determining, based on the network transmission delay information, that the network cannot support the first transmission delay (for example, the first transmission delay obtained according to Scenario 1 to Scenario 4). For example, an air interface transmission delay requirement is not greater than 20 ms, and an uplink air interface transmission delay requirement and a downlink air interface transmission delay requirement are respectively 5 ms and 15 ms. If an uplink air interface transmission delay supported by the RAN network element is 6 ms to 8 ms, and a downlink air interface transmission delay supported by the RAN network element is 15 ms to 17 ms, it is difficult to meet a delay requirement of 20 ms by updating the delay budget information. In this case, when it is difficult to meet the service requirement by updating the delay budget information (adjusting only the delay budget information), S1004 may be performed.

In this way, the application server may correspondingly adjust an application server processing delay based on a change of a network transmission delay, to enable the application server processing delay to match a network round-trip transmission latency supported by the network, and enable the network round-trip transmission latency to meet a service end-to-end delay requirement.

S1005: The PCF network element sends the second transmission delay to the AS. Correspondingly, the AS receives the second transmission delay from the PCF network element.

The second transmission delay may be carried in a service-based interface message between the AS network element and the PCF network element.

In addition, the PCF may send the second transmission delay to the AS by using a NEF network element.

In this way, the application server receives the second transmission delay from a policy control network element, so that overheads of the application server can be reduced, and running efficiency can be improved.

S1006: The AS determines an updated first transmission delay based on the second transmission delay, in other words, updates the first transmission delay.

For a specific implementation principle of S1006, refer to related descriptions of S601, S701, S801, or S906. Details are not described again.

S1007: The AS sends the updated first transmission delay to the PCF network element. Correspondingly, the PCF network element receives the updated first transmission delay from the AS.

For a specific implementation principle of S1007, refer to related descriptions of S602, S702, S802, or S907. Details are not described again.

S1008: The PCF network element determines, based on the updated first transmission delay, the delay budget information for transmitting service data.

The delay budget information indicates the uplink transmission delay budget and/or the downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data. For a specific implementation principle of the delay budget information, refer to related descriptions of S606. Details are not described again.

For a specific implementation principle of S1008, refer to related descriptions of S605 to S607, S704, S803, or S908. Details are not described again.

S1009: The PCF network element sends the delay budget information to the SMF network element. Correspondingly, the SMF network element receives the delay budget information from the PCF network element.

For a specific implementation principle of S 1009, refer to related descriptions of S608, S705, S804, or S909. Details are not described again.

S1010: The SMF network element sends the delay budget information to the RAN, and correspondingly, the RAN network element receives the delay budget information from the SMF.

For a specific implementation principle of S1010, refer to related descriptions of S609, S706, S805, or S910. Details are not described again.

S1011: The RAN adjusts an air interface resource based on the delay budget information.

For a specific implementation principle and technical effects of S1011, refer to related descriptions of S610, S707, S806, or S911. Details are not described again.

In this way, when determining that the network cannot support the first transmission delay, the policy control network element may provide the second transmission delay to the application server, and the application server updates the first transmission delay. For example, the application server may adjust the application server processing delay based on the second transmission delay, and then update the first transmission delay based on an adjusted application server processing delay, to better ensure a service delay requirement.

### Scenario 6:

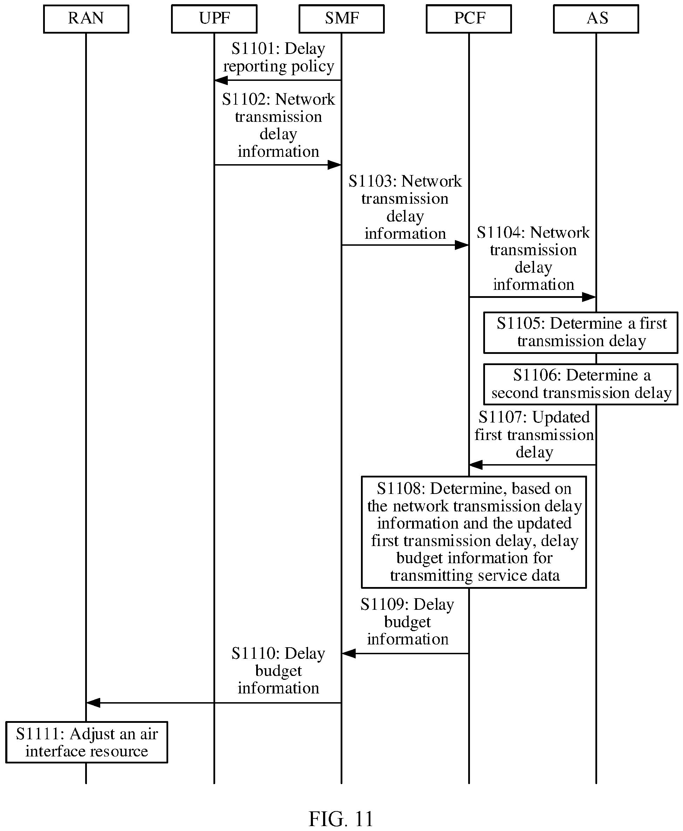

For example, FIG. 11 is a schematic flowchart 6 of a communication method according to an embodiment of this application. In Scenario 6, if a RAN network element receives a delay reporting policy from an SMF network element, the RAN network element may report network transmission delay information according to the delay reporting policy from the SMF network element. A PCF determines, based on the network transmission delay information, that a network cannot support a delay indicated by the delay budget information obtained according to the method in Scenario 1 to Scenario 4. In this way, a second transmission delay is updated by using an AS, and a first transmission delay is updated. The PCF network element re-determines the delay budget information based on the first transmission delay.

S1101: An SMF network element sends a delay reporting policy to a UPF network element. Correspondingly, the UPF network element receives the delay reporting policy from the SMF.

The delay reporting policy may include a sending rule of network transmission delay information, and the sending rule may include a reported event. The reported event may be that a radio access network element cannot support a current first transmission delay.

For a specific implementation principle of S1101, refer to related descriptions of S1001. Details are not described again.

S1102: The UPF network element sends the network transmission delay information according to the delay reporting policy. Correspondingly, the SMF network element receives the network transmission delay information from the UPF network element.

The network transmission delay information indicates an uplink transmission delay supported by a network and/or a downlink transmission delay supported by the network. For a specific implementation principle, refer to related descriptions of S602. Details are not described again.

For a specific implementation principle of S1102, refer to related descriptions of S1002. Details are not described again.

In this way, a frequency of sending the network transmission delay information can be reduced, to reduce a frequency of updating the first transmission delay, so that data processing complexity is reduced and data processing efficiency is improved.

It may be understood that a function of 51101 or S1102 may alternatively be implemented by the RAN network element. Details are not described herein again. The network transmission delay information sent by the RAN network element may be carried in a GTP-U data packet header.

S1103: The SMF network element sends the network transmission delay information to a PCF network element. Correspondingly, the PCF network element receives the network transmission delay information.

For a specific implementation principle of S1103, refer to related descriptions of S1003. Details are not described again.

S1104: The PCF network element sends the network transmission delay information to the AS. Correspondingly, the AS receives the network transmission delay information from the PCF.

The PCF network element may perform S1104 when it is difficult (namely, unable) to meet a service requirement by updating the delay budget information (adjusting only the delay budget information). In other words, the PCF network element may perform S1104 when determining, based on the network transmission delay information, that the network cannot support the first transmission delay (for example, the first transmission delay obtained according to Scenario 1 to Scenario 4). For example, an air interface transmission delay requirement is not greater than 20 ms, and an uplink air interface transmission delay requirement and a downlink air interface transmission delay requirement are respectively 5 ms and 15 ms. If an uplink air interface transmission delay supported by the RAN network element is 6 ms to 8 ms, and a downlink air interface transmission delay supported by the RAN network element is 15 ms to 17 ms, it is difficult to meet a delay requirement of 20 ms by updating the delay budget information. In this case, when it is difficult to meet a service requirement by updating the delay budget information (adjusting only the delay budget information), S1104 may be performed. The network transmission delay information may be carried in a service-based interface message between the AS and the PCF, or forwarded by using a NEF network element.

S1105: The AS determines a second transmission delay based on the network transmission delay information.

A principle of determining the second transmission delay by the AS is similar to a principle of determining the second transmission delay by a policy control network element in S1004. For a specific implementation principle of S1105, refer to related descriptions of S1004. Details are not described again.

In this way, the AS determines the second transmission delay based on the network transmission delay information, so that overheads of the policy control network element can be reduced and running efficiency of the policy control network element can be improved.

S1106: The AS determines an updated first transmission delay based on the second transmission delay, in other words, updates the first transmission delay.

For a specific implementation principle of S1106, refer to related descriptions of S601, S701, S801, S906, or S1006. Details are not described again.

S1107: The AS sends the updated first transmission delay to the PCF network element. Correspondingly, the PCF network element receives the updated first transmission delay from the AS.

For a specific implementation principle of S1107, refer to related descriptions of S602, S702, S802, S907, or S1007. Details are not described again.

S1108: The PCF network element determines, based on the updated first transmission delay, the delay budget information for transmitting service data.

The delay budget information indicates an uplink transmission delay budget and/or a downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data. For a specific implementation principle of the delay budget information, refer to related descriptions of S606. Details are not described again.

For a specific implementation principle of 51108, refer to related descriptions of S605 to S607, S704, S803, S908, or S1008. Details are not described again.

S1109: The PCF network element sends the delay budget information to the SMF network element. Correspondingly, the SMF network element receives the delay budget information from the PCF network element.

For a specific implementation principle of S1109, refer to related descriptions of S608, S705, S804, S909, or S1009. Details are not described again.

S1110: The SMF network element sends the delay budget information to a RAN. Correspondingly, the RAN network element receives the delay budget information from an SMF.

For a specific implementation principle of S1110, refer to related descriptions of S609, S706, S805, S910, or S1010. Details are not described again.

S1111: The RAN adjusts an air interface resource based on the delay budget information.

For a specific implementation principle and technical effects of S1111, refer to related descriptions of S610, S707, S806, S911, or S1011. Details are not described again.

In this way, when determining that the network cannot support the first transmission delay, the policy control network element may provide the network transmission delay information to the application server, and the application server updates the first transmission delay. For example, the application server may adjust an application server processing delay based on the second transmission delay determined based on the network transmission delay information, and then update the first transmission delay based on an adjusted application server processing delay, to better ensure a service delay requirement.

### Scenario 7:

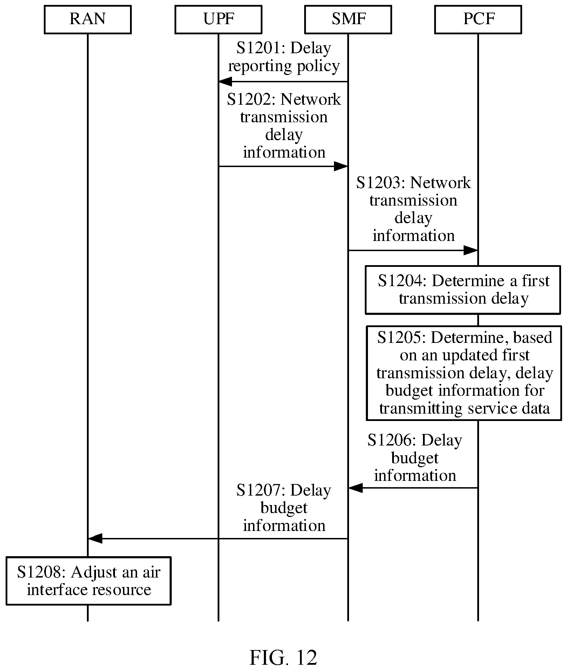

For example, FIG. 12 is a schematic flowchart 7 of a communication method according to an embodiment of this application. In Scenario 7, if a RAN network element receives a delay reporting policy from an SMF network element, the RAN network element may report network transmission delay information according to the delay reporting policy from the SMF network element. APCF network element determines, based on the network transmission delay information, that a network cannot support a delay indicated by the delay budget information obtained according to the method in Scenario 1 to Scenario 4. In addition, a network transmission delay may be updated to meet a service delay requirement. In this way, the PCF network element may update a first transmission delay based on the network transmission delay information, and redetermine the delay budget information.

S1201: An SMF network element sends a delay reporting policy to a UPF network element. Correspondingly, the UPF network element receives the delay reporting policy from the SMF.

The delay reporting policy may include a sending rule of network transmission delay information, and the sending rule may include a reported event. The reported event may be that a radio access network element cannot support received delay budget information, for example, the delay budget information obtained according to the method in Scenario 1 to Scenario 3.

For a specific implementation principle of S1201, refer to related descriptions of S1001 or 51101. Details are not described again. The delay reporting policy may be carried in a QoS policy. For example, the delay reporting policy and the delay budget information sent by the SFM network element to a RAN network element may be carried in a same QoS policy.

S1202: The UPF network element sends the network transmission delay information according to the delay reporting policy. Correspondingly, the SMF network element receives the network transmission delay information from the UPF network element.

For a specific implementation principle of S1202, refer to related descriptions of S1002 or S1102. Details are not described again.

In this way, a frequency of sending the network transmission delay information can be reduced, to reduce a frequency of updating a first transmission delay, so that data processing complexity is reduced and data processing efficiency is improved.

S1203: The SMF network element sends the network transmission delay information to a PCF network element. Correspondingly, the PCF network element receives the network transmission delay information.

For a specific implementation principle of S1203, refer to related descriptions of S 1003 or S1103. Details are not described again.

S1204: The PCF network element determines an updated first transmission delay, in other words, updates the first transmission delay.

When updating the delay budget information (without updating an AS processing delay) can meet a service requirement, in other words, when the PCF network element determines, based on the first transmission delay and the network transmission delay information, that a network can support the first transmission delay, the PCF network element performs S1204. For example, an air interface transmission delay requirement is not greater than 20 ms, and an uplink air interface transmission delay requirement and a downlink air interface transmission delay requirement are respectively 5 ms and 15 ms. If an uplink air interface transmission delay supported by the RAN network element is 6 ms to 8 ms, and a downlink air interface transmission delay is 12 ms to 17 ms, the PCF network element may adjust the delay budget information to meet a delay requirement that is not greater than 20 ms, and set an air interface uplink PDB and an air interface downlink PDB to 7 ms and 13 ms. In this case, updating the delay budget information (without updating the AS processing delay) can meet the service requirement, and S1204 may be performed.

In S1204, a principle of determining the updated first transmission delay by the PCF network element is similar to a principle of updating the first transmission delay by the AS. For specific implementation, refer to S1006 or S1105 to S1106. Details are not described herein again.

S1205: The PCF network element determines, based on the updated first transmission delay, delay budget information used to transmit service data.

The delay budget information indicates an uplink transmission delay budget and/or a downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data. For a specific implementation principle of the delay budget information, refer to related descriptions of S606. Details are not described again.

For a specific implementation principle of S1205, refer to related descriptions of S605 to S607, S704, S803, S908, S1008, or S1108. Details are not described again.

S1206: The PCF network element sends the delay budget information to the SMF network element. Correspondingly, the SMF network element receives the delay budget information from a PCF.

The network transmission delay information indicates an uplink transmission delay supported by the network and/or a downlink transmission delay supported by the network. For a specific implementation principle, refer to related descriptions of S602. Details are not described again.

For a specific implementation principle of S1206, refer to related descriptions of S608, S705, S804, S909, S1009, or S1109. Details are not described again.

S1207: The SMF network element sends the delay budget information to a RAN, and correspondingly, the RAN network element receives the delay budget information from an SMF.

For a specific implementation principle of S1207, refer to related descriptions of S609, S706, S805, S910, 51010, or 51110. Details are not described again.

S1208: The RAN determines or adjusts an air interface resource based on the delay budget information.

For a specific implementation principle and technical effects of S1208, refer to related descriptions of S610, S707, S806, S911, S1011, or S1111. Details are not described again.

In this way, data exchange procedures can be reduced, overheads of an application server can be reduced, and efficiency can be improved.

It should be noted that the sending rule of the network transmission delay information in the delay reporting policy may include one or more of the following: a reporting periodicity, a reporting delay threshold, or a reported event. This is not described herein again.

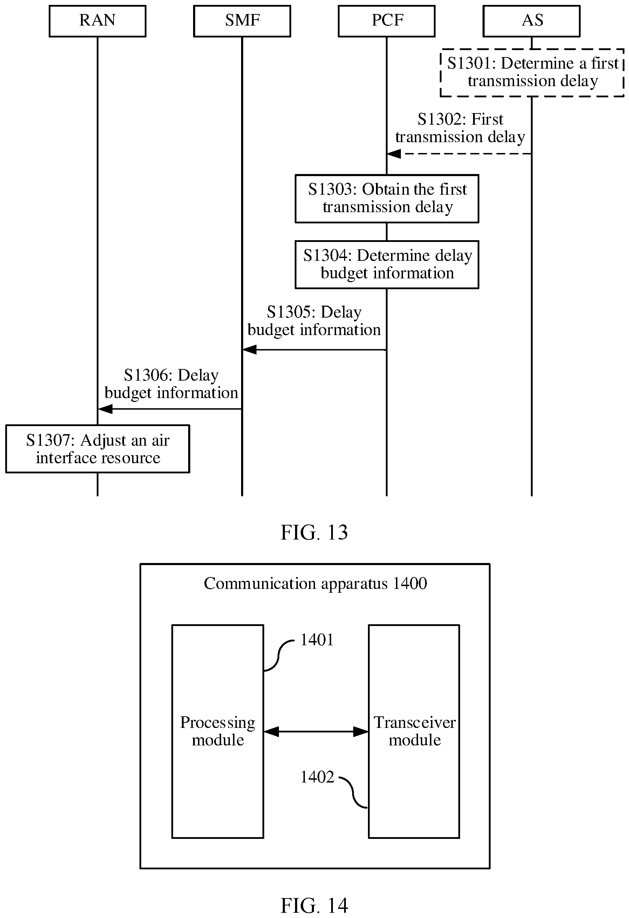

The foregoing describes in detail specific procedures of the communication method in Scenario 1 to Scenario 7 according to embodiments of this application with reference to FIG. 5 to FIG. 12. The following describes an overall procedure of the communication method in Scenario 1 to Scenario 7 with reference to FIG. 13.

For example, FIG. 13 is a schematic flowchart 8 of a communication method according to an embodiment of this application. The communication method is applicable to communication between the access network device, the session management network element, the policy control network element, and the policy control network element in the foregoing communication system. As shown in FIG. 13, a procedure of the communication method is as follows:

Optionally, in S1301, an application server determines a first transmission delay.

For a specific implementation principle of S1301, refer to related descriptions of S601, S701, S801, S905, S1006, or 51106. Details are not described again.

Optionally, in S1302, the application server sends the first transmission delay to a policy control network element.

For a specific implementation principle of S1302, refer to related descriptions of S602, S702, S802, S907, S1007, S1107, or S1204. Details are not described again.

S1303: The policy control network element obtains the first transmission delay.

For an implementation principle of obtaining the first transmission delay by the policy control network element in S1303, refer to the foregoing S602, S702, S802, S907, S1007, S1107, or S1204. Details are not described herein again.

S1304: The policy control network element determines, based on the first transmission delay, delay budget information for transmitting service data.

Network transmission delay information is sent to an SMF network element, and the delay budget information indicates an uplink transmission delay budget and/or a downlink transmission delay budget. In other words, the delay budget information indicates the uplink transmission delay budget for transmitting the service data; the delay budget information indicates the downlink transmission delay budget for transmitting the service data; or the delay budget information indicates the uplink transmission delay budget and the downlink transmission delay budget for transmitting the service data. For a specific implementation principle of the delay budget information, refer to related descriptions of S604. Details are not described again.

For a specific implementation principle of S1304, refer to related descriptions of S605 to 607, S704 to S704, S803, S908, S1008, S1108, or S1205. Details are not described again.

S1305: The policy control network element sends the delay budget information to a session management network element. The session management network element receives the delay budget information from the policy control network element. For a specific implementation principle of S1305, refer to related descriptions of S608, S705, S804, S909, S1009, S1109, or S1206. Details are not described again.

S1306: The session management network element sends the delay budget information to a radio access network element.

For a specific implementation principle of S1306, refer to related descriptions of S609, S706, S805, S910, S1010, S1110, or S1207. Details are not described again.

S1307: The radio access network element adjusts an air interface resource based on the delay budget information.

For a specific implementation principle and technical effects of S1307, refer to related descriptions of S610, S707, S806, S911, S1011, S1111, or S1208. Details are not described again.

It should be noted that in the communication method in Scenario 1 to Scenario 7, an AS sends the first transmission delay to a PCF network element before corresponding service data is transmitted.

In this embodiment of this application, adjusting the air interface resource may be determining an air interface resource for transmitting the service data when the air interface resource for transmitting the service data is not specified. Alternatively, adjusting the air interface resource may be updating an air interface resource for transmitting the service data when the air interface resource for transmitting the service data already exists.

In conclusion, based on the method described in Scenario 1 to Scenario 7, the policy control network element determines the delay budget information based on the first transmission delay, and sends the delay budget information to the radio access network element by using the session management network element. The radio access network element may schedule the air interface resource based on the uplink transmission delay budget and/or the downlink transmission delay budget in the delay budget information. For example, the air interface resource may be adjusted when the air interface resource cannot support the current delay budget information, so that scheduling that is of the air interface resource and that is for each data packet can be avoided. In this way, a frequency of adjusting the air interface resource is reduced, data processing complexity is reduced, and both a service delay requirement and data processing efficiency are ensured.

The communication method provided in embodiments of this application is described above in detail with reference to FIG. 1 to FIG. 13. A communication apparatus configured to perform the communication method provided in embodiments of this application is described below in detail with reference to FIG. 14 to FIG. 16.

In some embodiments, the communication apparatus may be used in Scenario 1 to Scenario 6. The following provides specific descriptions.

For example, FIG. 14 is a schematic diagram 1 of a structure of a communication apparatus according to an embodiment of this application. As shown in FIG. 14, the communication apparatus may include some function modules, configured to perform functions of the AS in Scenario 1 to Scenario 6. For example, a communication apparatus 1400 includes a processing module 1401 and a transceiver module 1402.

The processing module 1401 is configured for a first transmission delay, where the first transmission delay is used to represent a round-trip transmission latency requirement of service data in a network. The transceiver module 1402 is configured to send the first transmission delay to a policy control network element, where the first transmission delay is used by the policy control network element to determine, based on the first transmission delay, delay budget information for transmitting the service data, and the delay budget information indicates an uplink transmission delay budget and/or a downlink transmission delay budget.

In a possible design solution, the processing module 1401 is further configured to obtain a second transmission delay, adjust an application server processing delay based on the second transmission delay, and update the first transmission delay based on one or more of a service end-to-end delay, a terminal processing delay, and the application server processing delay. The second transmission delay is a round-trip transmission latency currently supported by the network. The transceiver module 1402 is further configured to send an updated first transmission delay to the policy control network element.

Optionally, the processing module 1401 is specifically configured to receive, by using the transceiver module 1402, the second transmission delay from the policy control network element, where the second transmission delay is determined based on network transmission delay information. Alternatively, the processing module 1401 is specifically configured to receive, by using the transceiver module 1402, network transmission delay information from the policy control network element, and determine the second transmission delay based on the network transmission delay information.

In a possible design solution, before the transceiver module 1402 sends the first transmission delay to the policy control network element, the processing module 1401 determines that the first transmission delay is greater than or equal to a first delay threshold.

Optionally, the transceiver module 1402 may include a sending module and a receiving module. The sending module is configured to implement a sending function of the communication apparatus 1400, and the receiving module is configured to implement a receiving function of the communication apparatus 1400.

Optionally, the communication apparatus 1400 may further include a storage module, and the storage module stores a program or instructions. When the processing module 1401 executes the program or the instructions, the communication apparatus 1400 is enabled to perform the functions of the AS in the communication method described in Scenario 1 to Scenario 6.

It should be understood that the processing module 1401 in the communication apparatus 1400 may be implemented by a processor or a processor-related circuit component, and may be a processor or a processing unit. The transceiver module 1402 may be implemented by a transceiver or a transceiver-related circuit component, and may be a transceiver or a transceiver unit.

It should be noted that the communication apparatus 1400 may be a network device, such as an application server, may be a chip (system) or another part or component that may be disposed in the network device, or may be an apparatus including the network device. This is not limited in this application.

In addition, for technical effects of the communication apparatus 1400, refer to technical effects of the communication method in Scenario 1 to Scenario 6. Details are not described herein again.

In some other embodiments, the communication apparatus 1400 may be used in Scenario 1 to Scenario 7. The following provides specific descriptions.

For example, FIG. 14 is a schematic diagram 1 of a structure of a communication apparatus 1400 according to an embodiment of this application. As shown in FIG. 14, the communication apparatus 1400 may include some function modules, configured to perform functions of the policy control network element such as the PCF network element in Scenario 1 to Scenario 7. For example, the communication apparatus 1400 includes a processing module 1401 and a transceiver module 1402. For example, the communication apparatus 1400 includes the processing module 1401 and the transceiver module 1402.

The processing module 1401 is configured to: obtain a first transmission delay, where the first transmission delay is used to represent a round-trip transmission latency requirement of service data in a network; and determine, based on the first transmission delay, delay budget information for transmitting the service data. The delay budget information indicates an uplink transmission delay budget and/or a downlink transmission delay budget. The transceiver module 1402 is configured to send the delay budget information to a session management network element.

In a possible design solution, the processing module 1401 is specifically configured to send, by using the transceiver module 1402, the first transmission delay to a network data analytics network element, and receive the delay budget information from the network data analytics network element, where the delay budget information is determined based on the first transmission delay.

In a possible design solution, the processing module 1401 is specifically configured to: obtain network transmission delay information, where the network transmission delay information indicates an uplink transmission delay supported by the network and/or a downlink transmission delay supported by the network; and determine, based on the current first transmission delay and the network transmission delay information, the delay budget information for transmitting the service data.

In a possible design solution, the processing module 1401 is further configured to: obtain the network transmission delay information, where the network transmission delay information indicates the uplink transmission delay supported by the network and/or the downlink transmission delay supported by the network; and when determining, based on the network transmission delay information, that the network cannot support the first transmission delay, determine a second transmission delay based on the network transmission delay information, where the second transmission delay is a round-trip transmission latency currently supported by the network. The transceiver module 1402 is further configured to send the second transmission delay to an application server, and receive an updated first transmission delay from the application server. The updated first transmission delay is determined based on the second transmission delay.

In a possible design solution, the processing module 1401 is further configured to: obtain the network transmission delay information, where the network transmission delay information indicates the uplink transmission delay supported by the network and/or the downlink transmission delay supported by the network; and when determining, based on the network transmission delay information, that the network cannot support the first transmission delay, send the network transmission delay information to an application server, where the network transmission delay information is used to determine a second transmission delay, and the second transmission delay is a round-trip transmission latency currently supported by the network. The transceiver module 1402 is further configured to receive an updated first transmission delay from the application server. The updated first transmission delay is determined based on the second transmission delay.

In a possible design solution, the processing module is specifically configured for a policy control network element to determine, according to the first transmission delay and a delay allocation policy, the delay budget information for transmitting the service data. The delay allocation policy indicates an association relationship between the uplink transmission delay budget and the downlink transmission delay budget.

Optionally, the transceiver module 1402 may include a sending module and a receiving module. The sending module is configured to implement a sending function of the communication apparatus 1400, and the receiving module is used for a receiving function of the communication apparatus 1400.

Optionally, the communication apparatus 1400 may further include a storage module, and the storage module stores a program or instructions. When the processing module 1401 executes the program or the instructions, the communication apparatus 1400 is enabled to perform the functions of the policy control network element in the communication method described in Scenario 1 to Scenario 7.

It should be understood that the processing module 1401 in the communication apparatus 1400 may be implemented by a processor or a processor-related circuit component, and may be a processor or a processing unit. The transceiver module 1402 may be implemented by a transceiver or a transceiver-related circuit component, and may be a transceiver or a transceiver unit.

It should be noted that the communication apparatus 1400 may be a network device, such as an application server, may be a chip (system) or another part or component that may be disposed in the network device, or may be an apparatus including the network device. This is not limited in this application.

In addition, for technical effects of the communication apparatus 1400, refer to technical effects of the communication method described in Scenario 1 to Scenario 7. Details are not described herein again.

In some embodiments, the communication apparatus may be used in Scenario 1 to Scenario 7. The following provides specific descriptions.

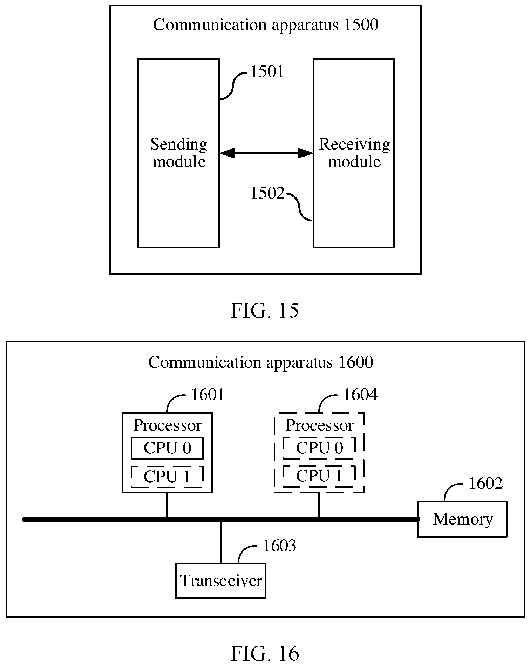

For example, FIG. 15 is a schematic diagram 2 of a structure of a communication apparatus according to an embodiment of this application. As shown in FIG. 15, a communication apparatus 1500 may include some function modules, configured to perform functions of the session management network element in Scenario 1 to Scenario 7. For example, the communication apparatus 1500 includes a sending module 1501 and a receiving module 1502.

The sending module 1501 is configured to send a delay reporting policy to a radio access network element and/or a user plane function network element. The delay reporting policy indicates a sending rule of network transmission delay information, and the network transmission delay information indicates an uplink transmission delay supported by a network and/or a downlink transmission delay supported by the network. The receiving module 1502 is configured to receive the network transmission delay information. The sending module 1501 is further configured to send the network transmission delay information to a policy control network element. The network transmission delay information is used by the policy control network element to determine delay budget information for transmitting service data.

In a possible design solution, the delay reporting policy includes one or more of the following: a reporting periodicity, a reporting delay threshold, or a reported event.

Optionally, the receiving module 1502 and the sending module 1501 may also be integrated into one module, for example, a transceiver module (not shown in FIG. 15). The transceiver module is configured to implement a sending function and a receiving function of the communication apparatus 1500.

Optionally, the communication apparatus 1500 may further include a processing module (shown a dashed line box in FIG. 15). The processing module is configured to implement a processing function of the communication apparatus 1500.

Optionally, the communication apparatus 1500 may further include a storage module (not shown in FIG. 15), and the storage module stores a program or instructions. When the receiving module 1502 executes the program or the instructions, the communication apparatus 1500 is enabled to perform the functions of the session management network element in the communication method shown in Scenario 1 to Scenario 7.

It should be understood that the processing module in the communication apparatus 1500 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1500 may be a terminal device or a network device, may be a chip (system) or another part or component that may be disposed in the terminal device or the network device, or may be an apparatus including the terminal device or the network device. This is not limited in this application.

In addition, technical effects of the communication apparatus 1500 may be technical effects of the communication method shown in any one of Scenario 1 to Scenario 7. Details are not described herein again.

In some embodiments, the communication apparatus 1400 may be used in Scenario 1 to Scenario 7. The following provides specific descriptions.

For example, FIG. 14 is a schematic diagram 1 of a structure of a communication apparatus 1400 according to an embodiment of this application. As shown in FIG. 14, the communication apparatus 1400 may include some function modules, configured to perform functions of the policy control network element such as the PCF network element in Scenario 1 to Scenario 7. For example, the communication apparatus 1400 includes a processing module 1401 and a transceiver module 1402. For example, the communication apparatus 1400 includes the processing module 1401 and the transceiver module 1402.

The transceiver module 1402 is configured to receive a delay reporting policy from a session management network element. The delay reporting policy indicates a sending rule of network transmission delay information, and the network transmission delay information indicates an uplink transmission delay supported by a network and/or a downlink transmission delay supported by the network. The processing module 1401 is configured to send the network transmission delay information according to the delay reporting policy.

In a possible design solution, the delay reporting policy includes one or more of the following: a reporting periodicity, a reporting delay threshold, or a reported event.

Optionally, when the delay reporting policy includes the reporting periodicity, the transceiver module 1402 is specifically configured for a radio access network element to send the network transmission delay information based on the reporting periodicity.

Optionally, when the delay reporting policy includes the reporting delay threshold, the transceiver module 1402 is specifically configured for a radio access network element to send the network transmission delay information in a case in which the network transmission delay information is greater than or equal to the reporting delay threshold.

Optionally, when the delay reporting policy includes the reported event, the transceiver module 1402 is specifically configured for a radio access network element to send the network transmission delay information in a case in which the reported event is that the radio access network element cannot support a current first transmission delay.

In a possible design solution, the transceiver module 1402 is further configured to receive delay budget information for transmitting service data. The delay budget information indicates an uplink transmission delay budget and/or a downlink transmission delay budget. The processing module 1401 is further configured to determine, based on the delay budget information, an air interface resource used to transmit the service data. Alternatively, the processing module 1401 is further configured to adjust, based on the delay budget information, an air interface resource used to transmit the service data.

Optionally, the transceiver module 1402 may include a sending module and a receiving module. The sending module is configured to implement a sending function of the communication apparatus 1400, and the receiving module is configured to implement a receiving function of the communication apparatus 1400.

Optionally, the communication apparatus 1400 may further include a storage module, and the storage module stores a program or instructions. When the processing module 1401 executes the program or the instructions, the communication apparatus 1400 is enabled to perform the functions of the policy control network element in the communication method in Scenario 1 to Scenario 7.

It should be understood that the processing module 1401 in the communication apparatus 1400 may be implemented by a processor or a processor-related circuit component, and may be a processor or a processing unit. The transceiver module 1402 may be implemented by a transceiver or a transceiver-related circuit component, and may be a transceiver or a transceiver unit.

It should be noted that the communication apparatus 1400 may be a network device, such as an application server, may be a chip (system) or another part or component that may be disposed in the network device, or may be an apparatus including the network device. This is not limited in this application.

In addition, for technical effects of the communication apparatus 1400, refer to technical effects of the communication method in Scenario 1 to Scenario 7. Details are not described herein again.

For example, FIG. 16 is a schematic diagram 3 of a structure of a communication apparatus according to an embodiment of this application. The communication apparatus may be a terminal device or a network device, or may be a chip (system) or another part or component that may be disposed in the terminal device or the network device. As shown in FIG. 16, a communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected through a communication bus.

The following specifically describes components of the communication apparatus 1600 with reference to FIG. 16.

The processor 1601 is a control center of the communication apparatus 1600, and may be one processor, or may be a collective term of a plurality of processing elements. For example, the processor 1601 is one or more central processing units (central processing units, CPUs), may be an application-specific integrated circuit (application specific integrated circuit, ASIC), or is configured as one or more integrated circuits for implementing embodiments of this application, for example, one or more digital signal processors (digital signal processors, DSPs), or one or more field programmable gate arrays (field programmable gate arrays, FPGAs).

Optionally, the processor 1601 may perform various functions of the communication apparatus 1600 by running or executing a software program stored in the memory 1602 and invoking data stored in the memory 1602.

In specific implementation, in an embodiment, the processor 1601 may include one or more CPUs, for example, a CPU 0 and a CPU 1 shown in FIG. 16.

In specific implementation, in an embodiment, the communication apparatus 1600 may alternatively include a plurality of processors, for example, the processor 1601 and the processor 1604 shown in FIG. 16. Each of the processors may be a single-core processor (single-CPU), or may be a multi-core processor (multi-CPU). The processor herein may refer to one or a plurality of devices, circuits, and/or processing cores configured to process data (for example, computer program instructions).

The memory 1602 is configured to store a software program for performing the solutions of this application, and the processor 1601 controls execution of the software program. For a specific implementation, refer to the foregoing method embodiment, and details are not described herein again.

Optionally, the memory 1602 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory 1602 may be integrated with the processor 1601, or may exist independently, and is coupled to the processor 1601 through an interface circuit (not shown in FIG. 16) of the communication apparatus 1600. This is not specifically limited in this embodiment of this application.

The transceiver 1603 is configured to communicate with another communication apparatus. For example, the communication apparatus 1600 is a terminal device, and the transceiver 1603 may be configured to communicate with a network device or communicate with another terminal device. For another example, the communication apparatus 1600 is a network device, and the transceiver 1603 may be configured to communicate with a terminal device or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that a structure of the communication apparatus 1600 shown in FIG. 16 does not constitute a limitation on the communication apparatus. An actual communication apparatus may include more or fewer components than those shown in the figure, combine some components, or have different component arrangement.

In addition, for technical effects of the communication apparatus 1600, refer to the technical effects of the communication method according to the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor, or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or a part of the foregoing embodiments may be implemented by using software, hardware (such as a circuit), firmware, or any combination thereof. When the software is used to implement the embodiments, all or a part of the foregoing embodiments may be implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the processes do not mean execution sequences in various embodiments of this application. The execution sequences of the foregoing processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or another form.

The units described as separate parts may or may not be physically separate, and parts displayed as units may or may not be physical units, in other words, the parts may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, a network device, or the like) to perform all or a part of the steps in the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by an application server, a first transmission delay, wherein the first transmission delay is used to represent a round-trip transmission latency requirement of service data in a network; and
sending, by the application server, the first transmission delay to a policy control network element, wherein the first transmission delay is used by the policy control network element to determine, based on the first transmission delay, delay budget information for transmitting the service data, and the delay budget information indicates an uplink transmission delay budget and/or a downlink transmission delay budget.

2. The method according to claim 1, wherein the method further comprises:
obtaining, by the application server, a second transmission delay, wherein the second transmission delay is a round-trip transmission latency currently supported by the network;
adjusting, by the application server, an application server processing delay based on the second transmission delay;
updating, by the application server, the first transmission delay based on one or more of a service end-to-end delay, a terminal processing delay, and the application server processing delay; and
sending, by the application server, an updated first transmission delay to the policy control network element.

3. The method according to claim 2, wherein the obtaining, by the application server, a second transmission delay comprises:
receiving, by the application server, the second transmission delay from the policy control network element, wherein the second transmission delay is determined based on network transmission delay information; or
receiving, by the application server, network transmission delay information from the policy control network element, and determining the second transmission delay based on the network transmission delay information.

4. The method according to any one of claims 1 to 3, wherein before the sending, by the application server, the first transmission delay to a policy control network element, the method further comprises:
determining, by the application server, that the first transmission delay is greater than or equal to a transmission delay threshold.

5. A communication method, wherein the method comprises:
obtaining, by a policy control network element, a first transmission delay, wherein the first transmission delay is used to represent a round-trip transmission latency requirement of service data in a network;
determining, by the policy control network element based on the first transmission delay, delay budget information for transmitting the service data, wherein the delay budget information indicates an uplink transmission delay budget and/or a downlink transmission delay budget; and
sending, by the policy control network element, the delay budget information to a session management network element.

6. The method according to claim 5, wherein the determining, by the policy control network element based on the first transmission delay, delay budget information for transmitting the service data comprises:
sending, by the policy control network element, the first transmission delay to a network data analytics network element; and
receiving, by the policy control network element, the delay budget information from the data analytics network element, wherein the delay budget information is determined based on the first transmission delay.

7. The method according to claim 5, wherein the determining, by the policy control network element based on the first transmission delay, delay budget information for transmitting the service data comprises:
obtaining, by the policy control network element, network transmission delay information, wherein the network transmission delay information indicates an uplink transmission delay supported by the network and/or a downlink transmission delay supported by the network; and
determining, by the policy control network element based on the first transmission delay and the network transmission delay information, the delay budget information for transmitting the service data.

8. The method according to any one of claims 5 to 7, wherein the method further comprises:
obtaining, by the policy control network element, the network transmission delay information, wherein the network transmission delay information indicates the uplink transmission delay supported by the network and/or the downlink transmission delay supported by the network; and
determining, by the policy control network element, a second transmission delay based on the network transmission delay information, wherein the second transmission delay is a round-trip transmission latency currently supported by the network.

9. The method according to claim 8, wherein before the determining, by the policy control network element, a second transmission delay based on the network transmission delay information, the method further comprises:
determining, by the policy control network element based on the network transmission delay information, that the network cannot support the first transmission delay.

10. The method according to claim 8 or 9, wherein the method further comprises:
sending, by the policy control network element, the second transmission delay to an application server; and
receiving, by the policy control network element, an updated first transmission delay from the application server, wherein the updated first transmission delay is determined based on the second transmission delay.

11. The method according to any one of claims 5 to 7, wherein the method further comprises:
obtaining, by the policy control network element, the network transmission delay information, wherein the network transmission delay information indicates the uplink transmission delay supported by the network and/or the downlink transmission delay supported by the network;
determining, by the policy control network element based on the network transmission delay information, that the network cannot support the first transmission delay;
sending, by the policy control network element, the network transmission delay information to an application server, wherein the network transmission delay information is used to determine a second transmission delay, and the second transmission delay is a round-trip transmission latency currently supported by the network; and
receiving, by the policy control network element, an updated first transmission delay from the application server, wherein the updated first transmission delay is determined based on the second transmission delay.

12. The method according to claim 5, wherein the determining, by the policy control network element based on the first transmission delay, delay budget information for transmitting the service data comprises:
determining, by the policy control network element according to the first transmission delay and a delay allocation policy, the delay budget information for transmitting the service data, wherein the delay allocation policy indicates an association relationship between the uplink transmission delay budget and the downlink transmission delay budget.

13. A communication method, wherein the method comprises:
sending, by a session management network element, a delay reporting policy to a radio access network element and/or a user plane function network element, wherein the delay reporting policy comprises a sending rule of network transmission delay information, and the network transmission delay information indicates an uplink transmission delay supported by a network and/or a downlink transmission delay supported by the network;
receiving, by the session management network element, the network transmission delay information; and
sending, by the session management network element, the network transmission delay information to a policy control network element, wherein the network transmission delay information is used by the policy control network element to determine delay budget information for transmitting service data.

14. The method according to claim 13, wherein the delay reporting policy comprises one or more of the following: a reporting periodicity, a reporting delay threshold, or a reported event.

15. A communication method, wherein the method comprises:
receiving, by a radio access network element, a delay reporting policy from a session management network element, wherein the delay reporting policy comprises a sending rule of network transmission delay information, and the network transmission delay information indicates an uplink transmission delay supported by a network and/or a downlink transmission delay supported by the network; and
sending, by the radio access network element, the network transmission delay information according to the delay reporting policy.

16. The method according to claim 15, wherein the delay reporting policy comprises one or more of the following: a reporting periodicity, a reporting delay threshold, or a reported event.

17. The method according to claim 16, wherein when the delay reporting policy comprises the reporting periodicity,
the sending, by the radio access network element, the network transmission delay information according to the delay reporting policy comprises:
sending, by the radio access network element, the network transmission delay information based on the reporting periodicity.

18. The method according to claim 16 or 17, wherein when the delay reporting policy comprises the reporting delay threshold, the sending, by the radio access network element, the network transmission delay information according to the delay reporting policy comprises:
sending, by the radio access network element, the network transmission delay information in a case in which the network transmission delay information is greater than or equal to the reporting delay threshold.

19. The method according to any one of claims 16 to 18, wherein when the delay reporting policy comprises the reported event, the sending, by the radio access network element, the network transmission delay information according to the delay reporting policy comprises:
sending, by the radio access network element, the network transmission delay information when the reported event is that the radio access network element cannot support received delay budget information.

20. The method according to any one of claims 15 to 19, wherein the method further comprises:
receiving, by the radio access network element, the delay budget information for transmitting service data, wherein the delay budget information indicates an uplink transmission delay budget and/or a downlink transmission delay budget; and
determining, by the radio access network element based on the delay budget information, an air interface resource used to transmit the service data; or
adjusting, by the radio access network element based on the delay budget information, an air interface resource used to transmit the service data.

21. A communication method, wherein the method comprises:
determining, by an application server, a first transmission delay, wherein the first transmission delay is used to represent a round-trip transmission latency requirement of service data in a network;
sending, by the application server, the first transmission delay to a policy control network element;
obtaining, by the policy control network element, the first transmission delay;
determining, by the policy control network element based on the first transmission delay, delay budget information for transmitting the service data, wherein the delay budget information indicates an uplink transmission delay budget and/or a downlink transmission delay budget; and
sending, by the policy control network element, the delay budget information to a session management network element.

22. The method according to claim 21, wherein the determining, by the policy control network element based on the first transmission delay, delay budget information for transmitting the service data comprises:
sending, by the policy control network element, the first transmission delay to a network data analytics network element; and
receiving, by the policy control network element, the delay budget information from the data analytics network element, wherein the delay budget information is determined based on the first transmission delay.

23. The method according to claim 21, wherein the determining, by the policy control network element based on the first transmission delay, delay budget information for transmitting the service data comprises:
obtaining, by the policy control network element, network transmission delay information, wherein the network transmission delay information indicates an uplink transmission delay supported by the network and/or a downlink transmission delay supported by the network; and
determining, by the policy control network element based on the first transmission delay and the network transmission delay information, the delay budget information for transmitting the service data.

24. The method according to any one of claims 21 to 23, wherein the method further comprises:
obtaining, by the policy control network element, the network transmission delay information, wherein the network transmission delay information indicates the uplink transmission delay supported by the network and/or the downlink transmission delay supported by the network; and
determining, by the policy control network element, a second transmission delay based on the network transmission delay information, wherein the second transmission delay is a round-trip transmission latency currently supported by the network.

25. The method according to claim 24, wherein before the determining, by the policy control network element, a second transmission delay based on the network transmission delay information, the method further comprises:
determining, by the policy control network element based on the network transmission delay information, that the network cannot support the first transmission delay.

26. The method according to claim 24 or 25, wherein the method further comprises:
sending, by the policy control network element, the second transmission delay to the application server;
obtaining, by the application server, the second transmission delay, wherein the second transmission delay is the round-trip transmission latency currently supported by the network;
adjusting, by the application server, an application server processing delay based on the second transmission delay;
updating, by the application server, the first transmission delay based on one or more of a service end-to-end delay, a terminal processing delay, and the application server processing delay;
sending, by the application server, an updated first transmission delay to the policy control network element; and
receiving, by the policy control network element, the updated first transmission delay from the application server, wherein the updated first transmission delay is determined based on the second transmission delay.

27. The method according to claim 26, wherein the obtaining, by the application server, the second transmission delay comprises:
receiving, by the application server, the second transmission delay from the policy control network element, wherein the second transmission delay is determined based on the network transmission delay information; or
receiving, by the application server, the network transmission delay information from the policy control network element, and determining, by the application server, the second transmission delay based on the network transmission delay information.

28. The method according to any one of claims 21 to 27, wherein the method further comprises:
obtaining, by the policy control network element, the network transmission delay information, wherein the network transmission delay information indicates the uplink transmission delay supported by the network and/or the downlink transmission delay supported by the network;
determining, by the policy control network element based on the network transmission delay information, that the network cannot support the first transmission delay;
sending, by the policy control network element, the network transmission delay information to the application server, wherein the network transmission delay information is used to determine the second transmission delay, and the second transmission delay is the round-trip transmission latency currently supported by the network; and
receiving, by the policy control network element, the updated first transmission delay from the application server, wherein the updated first transmission delay is determined based on the second transmission delay.

29. The method according to claim 28, wherein before the obtaining, by the policy control network element, the network transmission delay information, the method further comprises:
sending, by the session management network element, a delay reporting policy to a radio access network element and/or a user plane function network element, wherein the delay reporting policy comprises a sending rule of the network transmission delay information, and the network transmission delay information indicates the uplink transmission delay supported by the network and/or the downlink transmission delay supported by the network;
receiving, by the radio access network element, the delay reporting policy from the session management network element;
sending, by the radio access network element, the network transmission delay information according to the delay reporting policy;
receiving, by the session management network element, the network transmission delay information; and
sending, by the session management network element, the network transmission delay information to the policy control network element, wherein the network transmission delay information is used by the policy control network element to determine the delay budget information for transmitting the service data.

30. The method according to claim 29, wherein the delay reporting policy comprises one or more of the following: a reporting periodicity, a reporting delay threshold, or a reported event.

31. The method according to claim 30, wherein when the delay reporting policy comprises the reporting periodicity,
the sending, by the radio access network element, the network transmission delay information according to the delay reporting policy comprises:
sending, by the radio access network element, the network transmission delay information based on the reporting periodicity.

32. The method according to claim 30 or 31, wherein when the delay reporting policy comprises the reporting delay threshold, the sending, by the radio access network element, the network transmission delay information according to the delay reporting policy comprises:
sending, by the radio access network element, the network transmission delay information in a case in which the network transmission delay information is greater than or equal to the reporting delay threshold.

33. The method according to any one of claims 30 to 32, wherein when the delay reporting policy comprises the reported event, the sending, by the radio access network element, the network transmission delay information according to the delay reporting policy comprises:
sending, by the radio access network element, the network transmission delay information when the reported event is that the radio access network element cannot support the received delay budget information.

34. The method according to any one of claims 29 to 33, wherein the method further comprises:
receiving, by the radio access network element, the delay budget information for transmitting the service data, wherein the delay budget information indicates the uplink transmission delay budget and/or the downlink transmission delay budget; and
determining, by the radio access network element based on the delay budget information, an air interface resource used to transmit the service data; or
adjusting, by the radio access network element based on the delay budget information, an air interface resource used to transmit the service data.

35. The method according to any one of claims 21 to 34, wherein before the sending, by the application server, the first transmission delay to a policy control network element, the method further comprises:
determining, by the application server, that the first transmission delay is greater than or equal to a transmission delay threshold.

36. A communication apparatus, comprising a module configured to perform the method according to any one of claims 1 to 4.

37. A communication apparatus, comprising a module configured to perform the method according to any one of claims 5 to 12.

38. A communication apparatus, comprising a module configured to perform the method according to claim 13 or 14.

39. A communication apparatus, comprising a module configured to perform the method according to any one of claims 15 to 20.

40. A communication apparatus, wherein the communication apparatus comprises a processor and a memory, wherein the memory is configured to store computer instructions, and when the processor executes the instructions, the communication apparatus is enabled to perform the communication method according to any one of claims 1 to 20.

41. A communication apparatus, wherein the communication apparatus comprises a processor and a transceiver, wherein the transceiver is configured to exchange information between the communication apparatus and another communication apparatus, and the processor executes program instructions to perform the communication method according to any one of claims 1 to 20.

42. A communication system, wherein the communication system comprises at least one communication apparatus configured to perform the method according to any one of claims 1 to 20.

43. A computer-readable storage medium, wherein the computer-readable storage medium comprises a computer program or instructions, and when the computer program or the instructions are run on a computer, the computer is enabled to perform the communication method according to any one of claims 1 to 20.

44. A computer program product, wherein the computer program product comprises a computer program or instructions, and when the computer program or the instructions are run on a computer, the computer is enabled to perform the communication method according to any one of claims 1 to 20.

45. A communication method, wherein the method comprises:
sending, by a session management network element, a delay reporting policy to a radio access network element and/or a user plane function network element, wherein the delay reporting policy comprises a sending rule of network transmission delay information, and the network transmission delay information indicates an uplink transmission delay supported by a network and/or a downlink transmission delay supported by the network;
receiving, by the radio access network element and/or the user plane function network element, the network transmission delay information from the session management network element; and
sending, by the session management network element, the network transmission delay information to a policy control network element, wherein the network transmission delay information is used by the policy control network element to determine delay budget information for transmitting service data.

46. The method according to claim 45, wherein the method further comprises:
receiving, by the policy control network element, the network transmission delay information sent by the session management network element.
